# EUROPEAN PATENT APPLICATION

(11) **EP 1 538 643 A2**
(43) Date of publication of application: **08.06.2005**
(21) Application number: 04021370.4
(22) Date of filing: 08.09.2004
(51) Int. Cl.: H01H 1/02

(54) **Electrical member, electrical device, and method of manufacturing the electrical member and electrical device**

(30) Priority: 01.12.2003 JP 2003401767; 16.06.2004 JP 2004178485
(71) Applicant: FUJI XEROX CO., LTD., Minato-ku, Tokyo (JP)
(72) Inventor: Watanabe, Miho, Ashigarakami-gun, Kanagawa (JP); Kishi, Kentaro, Ashigarakami-gun, Kanagawa (JP); Manabe, Chikara, Ashigarakami-gun, Kanagawa (JP); Anazawa, Kazunori, Ashigarakami-gun, Kanagawa (JP); Hirakata, Masaki, Ashigarakami-gun, Kanagawa (JP); Shigematsu, Taishi, Ashigarakami-gun, Kanagawa (JP); Watanabe, Hiroyuki, Ashigarakami-gun, Kanagawa (JP); Isozaki, Takashi, Ashigarakami-gun, Kanagawa (JP); Ooma, Shigeki, Ashigarakami-gun, Kanagawa (JP); Okada, Shinsuke, Ashigarakami-gun, Kanagawa (JP)
(74) Representative: Forstmeyer, Dietmar, Dr. rer. nat., Dipl.-Chem.

(57) **Abstract**

To provide: an electrical member which can effectively apply characteristics of a carbon nanotube such as an electrode; and an electrical device such as an electrical switch. To provide: an electrical member provided with an electrical contact formed on a base body, in which the electrical contact has a carbon nanotube structure having a network structure constructed by mutually cross-linking functional groups bonded to multiple carbonnanotubes through chemical bonding of the functional groups together; an electrical device employing the electrical member; and a method of manufacturing an electrical member including the steps of: supplying a base body surface with a solution containing multiple carbon nanotubes to which multiple functional groups are bonded; and mutually cross-linking the multiple carbon nanotubes through chemical bonding of the multiple functional groups together to construct a network structure constituting a carbon nanotube structure as an electrical contact.

## Description

### Field of the Invention and Related Art Statement

The present invention relates to: an electrical member employing a carbon nanotube structure as an electrical contact such as an electrode, a contact member, a switch member, or a substrate for an electrical device; an electrical device provided with the electrical member such as an electrical switch, an electric relay, a circuit breaker, or an exchanger; and methods of manufacturing the electrical member and electrical device.

Carbon nanotubes (CNTs), with their unique shapes and characteristics, may find various applications. A carbon nanotube has a tubular shape of one-dimensional nature which is obtained by rolling one or more graphene sheets composed of six-membered rings of carbon atoms into a tube. A carbon nanotube which is formed from one graphene sheet is called a single-wall carbon nanotube (SWNT) while a carbon nanotube which is formed from multiple graphene sheets is called a multi-wall carbon nanotube (MWNT). SWNTs are about 1 nm in diameter whereas multi-wall carbon nanotubes are several tens nm in diameter, and both are far thinner than their predecessors, which are called carbon fibers.

One of the characteristics of carbon nanotubes resides in that the aspect ratio of length to diameter is very large since the length of carbon nanotubes is on the order of micrometers. Carbon nanotubes are unique in their extremely rare nature of being both metallic and semiconductive because six-membered rings of carbon atoms in carbon nanotubes are arranged into a spiral. In addition, the electrical conductivity of carbon nanotubes is very high and allows a current flow at a current density of 100 MA/cm² or more.

Carbon nanotubes excel not only in electrical characteristics but also in mechanical characteristics. That is, the carbon nanotubes are distinctively tough, as attested by their Young's moduli exceeding 1 TPa, which belies their extreme lightness resulting from being formed solely of carbon atoms. In addition, the carbon nanotubes have high elasticity and resiliency resulting from their cage structure. Having such various and excellent characteristics, carbon nanotubes are very appealing as industrial materials.

Applied researches that exploit the excellent characteristics of carbon nanotubes have been heretofore made extensively. To give a few examples, a carbon nanotube is added as a resin reinforcer or as a conductive composite material while another research uses a carbon nanotube as a probe of a scanning probe microscope. Carbon nanotubes have also been used as minute electron sources, field emission electronic devices, and flat displays. An application that is being developed is to use a carbon nanotube as a hydrogen storage.

As described above, carbon nanotubes may find use in various applications. In particular, the applications of the carbon nanotubes to electronic materials and electronic devices have been attracting attention. Diodes and transistors as electrical devices have been prototyped already.

As one example of the applications, JP 2002-075102 A discloses a mixture prepared by dispersing carbon nanotubes as electrically conductive particles in a polymer for binding and used as an electrical contact material . The mixture does not form an oxide f ilm on a contact surface, has little change in contact resistance, and can be used stably over a long period of time.

### Summary of the Invention

However, a mixture prepared by dispersing carbon nanotubes in a resin and then solidifying the dispersion as described in JP 2002-075102 A only accidentally causes contact between carbon nanotube surfaces because the resin adheres to the carbon nanotube surface during mixing. Thus, an electrical path becomes unstable depending only on entanglement of the carbon nanotubes, and a contact state may change such as electrical disconnection at a contact through actions of collision, pressing, or the like. Further, the carbon nanotubes bundle together (multiple carbon nanotubes form a bundle), and a structure formed through entanglement has a large gap portion within a network and has a nonuniform density. Thus, electrical conductivity varies at portions where facing electrical contacts are in contact with each other.

Further, in an electrical switch, which opens and closes an electrically conductive path through contact and separation of an electrode at an electrical contact, contact and separation at the electrical contact are repeated. Thus, strength of the contact in addition to resistivity is an important factor. An alloy of hard metals such as silver or copper, and tungsten was used, when a metal was used as an electrical contact.

On the other hand, a carbon nanotube itself is tough, and a possibility of the carbon nanotube itself cut through opening and closing actions is low even with a carbon nanotube-dispersed resin as in JP 2002-075102 A. However, an increased amount of the nanotube dispersed to enhance electrical conductivity as described above or to provide a uniform nanotube distribution at the contact deteriorates the strength of the contact itself with decreasing amount of a binder.

The present invention has been made in view of the above circumstances and provides: an electrical member which can effectively apply characteristics of a carbon nanotube such as an electrode; and an electrical device such as an electrical switch.

The present invention provides an electrical member including a base body and an electrical contact formed on the base body, in which the electrical contact consists of a carbon nanotube structure having a network structure constructed by mutually cross-linking functional groups bonded to multiple carbon nanotubes through chemical bonding of the functional groups together.

That is, the electrical member of the present invention has mutually cross-linked carbon nanotubes, which is different from mere contact between carbon nanotube surfaces. Secure and stable electrical connection is provided to ensure a conductive path between the nanotubes and to reduce resistivity of the electrical contact itself. Further, the electrical contact consists of chemically stable carbon nanotubes, and thus can be used stably over a long period of time. The electrical contact has a network structure of mutually cross-linked carbon nanotubes, and thus is hardly destroyed by impact such as contact with another electrode or pressing. The carbon nanotubes are hardly bundled by the presence of functional groups.

The carbon nanotube is tough and flexible, and a carbon nanotube structure having a network structure retains the characteristic. Thus, disconnection due to cutting off of the electrical contact hardly occurs, and the electrical member can be used stably over a long period of time.

The electrical contact refers to a portion for providing electrical connection through contact with another electrode and is not limited to a contact of a device in which contact and separation are repeated such as an electrical switch. The electrical contact can be applied to a device of an embodiment in which a contact state is maintained through other methods such as contact bonding and using a resin.

Further, a material or shape of a base body itself on which a contact is formed is not particularly limited. For example, a base body on which a contact is formed may consist of a metal plate, an electrically conductive polymer, a metal thin film, and a thick film of a carbon nanotube structure having a network structure. Further, the carbon nanotube structure constituting the electrical contact of the present invention can be formed uniformly, and thus, variation in electrical characteristics of the contact can be suppressed even with minute patterning. Thus, an electrical contact may be formed on a wiring pattern electrode as an electrical contact with another device electrode in fine wiring patterning formed on a silicon substrate.

An electrical device such as an electrical switch can include a first electrode composed of the electrical member of the present invention and a second electrode which can contact with and separate from the electrical contact of the first electrode. The electrical device of the present invention such as an electrical switch can be used stably over a long period of time because of particularly effective chemical stability and toughness of the carbon nanotube itself.

The carbon nanotube structure is preferably obtained by curing a solution containing multiple carbon nanotubes to which multiple functional groups are bonded, to thereby form a cross-linked site through chemical bonding of the multiple functional groups bonded to the carbon nanotubes.

Of those, a preferable first structure for the cross-linked site has a structure constructed by cross-linking the multiple functional groups together through a cross-linking agent in the solution, and the cross-linking agent is more preferably not self-polymerizable.

By forming the carbon nanotube structure through the above curing of the solution, the cross-linked site where the carbon nanotubes are cross-linked together has a cross-linking structure in which residues of the functional groups remaining after a cross-linking reaction are connected together using a connecting group which is a residue of the cross-linking agent remaining after the cross-linking reaction. Thus, a stable electrical contact can be provided.

A cross-linking agent for cross-linking carbon nanotubes together such as alkoxide described in JP 2000-026760 A can be used. However, the cross-linking agent having property of polymerizing itself (self-polymerizability) such as alkoxide polymerizes the cross-linking agent itself to form a connected structure. Carbon nanotubes may be dispersed in a structure of the cross-linking agent, thereby reducing an actual density of the carbon nanotubes in the carbon nanotube structure. A size of the contact itself must be sufficiently large when the carbon nanotube is used as an electrical contact, to provide necessary electrical conductivity.

On the other hand, a not self-polymerizable cross-linking agent allows control of a gap between each of the carbon nanotubes to a size of a cross-linking agent residue used. Therefore, a desired network structure of carbon nanotubes can be obtained with high duplicability. Further, reducing the size of the cross-linking agent residue can extremely narrow a gap between each of the carbon nanotubes electrically and physically. In addition, carbon nanotubes in the structure can be densely structured.

Therefore, a not self-polymerizable cross-linking agent can provide the carbon nanotube structure according to the present invention exerting the electrical characteristics and physical characteristics of a carbon nanotube itself at high levels.

As a result, an electrical contact becomes uniform and highly dense, thereby providing stable electrical connection. In the present invention, the term "self-polymerizable" refers to property of which the cross-linking agents may prompt a polymerization reaction with each other in the presence of other components such as water or in the absence of other components. On the other hand, theterm"notself-polymerizable"meansthatthecross-linkingagent has no such property.

Thus, a high density and homogeneous electrical contact can be formed even when a fine electrical contact must be formed on afineelectrode (on an electrode on a circuit substrate, for example) .

A selection of a not self-polymerizable cross-linking agent as the cross-linking agent provides a cross-linked site, where carbon nanotubes in the electrical member of the present invention are cross-linked together, having primarily an identical cross-linking structure. Furthermore, the connecting group preferably has hydrocarbon as its skeleton, and the hydrocarbon preferably has 2 to 10 carbon atoms. Reducing the number of carbon atoms can shorten the length of a cross-linked site and sufficiently narrow a gap between carbon nanotubes as compared to the length of a carbon nanotube itself. As a result, a carbon nanotube structure having a network structure composed substantially only of carbon nanotubes can be obtained, thereby providing an electrical contact having excellent electrical characteristics.

Examples of the functional group include -OH, -COOH, -COOR (where R represents a substituted or unsubstituted hydrocarbon group), -COX (where X represents a halogen atom), -NH₂, and -NCO. A selection of at least one functional group from the group consisting of the above functional groups is preferable, and in such a case, a cross-linking agent, which may prompt a cross-linking reaction with the selected functional group, is selected as the cross-linking agent.

Further, examples of the preferable cross-linking agent include a polyol, a polyamine, a polycarboxylic acid, a polycarboxylate, a polycarboxylic acid halide, a polycarbodiimide, and a polyisocyanate. A selection of at least one cross-linking agent from the group consisting of the above cross-linking agents is preferable, and in such a case, a functional group, which may prompt a cross-linking reaction with the selected cross-linking agent, is selected as the functional group.

At least one functional group and at least one cross-linking agent are preferably selected respectively from the group consisting of the functional groups exemplified as the preferable functional groups and the group consisting of the cross-linking agents exemplified as the preferable cross-linking agents, so that a combination of the functional group and the cross-linking agent may prompt a cross-linking reaction with each other.

Examples of the particularly preferable functional group include -COOR (where R represents a substituted or unsubstituted hydrocarbon group). Introduction of a carboxyl group into carbon nanotubes is relatively easy, and the resultant substance (carbon nanotube carboxylic acid) has high reactivity. Therefore, after the formation of the substance, it is relatively easy to esterify the substance to convert its functional group into -COOR (where R represents a substituted or unsubstituted hydrocarbon group). The functional group easily prompts a cross-linking reaction and is suitable for formation of a carbon nanotube structure.

A polyol can be exemplified as the cross-linking agent corresponding to the functional group. A polyol is cured by a reaction with -COOR (where R represents a substituted or unsubstituted hydrocarbon group), and forms a robust cross-linked substance with ease. Among polyols, each of glycerin and ethylene glycol reacts with the above functional groups well. Moreover, each of glycerin and ethylene glycol itself is highly biodegradable, and provides a low environmental load.

In the cross-linked site where multiple carbon nanotubes are mutually cross-linked, the functional group is -COOR (where R represents a substituted or unsubstituted hydrocarbon group). The cross-linked site is -COO (CH₂)₂OCO- in the case where ethylene glycol is used as the cross-linking agent. In the case where glycerin is used as the cross-linking agent, the cross-linked site is -COOCH₂CHOHCH₂OCO- or -COOCH₂CH(OCO-)CH₂OH if two OH groups contribute to the cross-linking, and the cross-linked site is -COOCH₂CH(OCO-)CH₂OCO- if three OH groups contribute to the cross-linking. The chemical structure of the cross-linked site may be any chemical structure selected from the group consisting of the above four structures.

A second structure preferable as the structure of the cross-linked site of carbon nanotubes is a structure formed through chemical bonding of multiple functional groups together. More preferably, a reaction that forms the chemical bonding is any one of dehydration condensation, a substitution reaction, an addition reaction, and an oxidative reaction.

The carbon nanotube structure of this case forms a cross-linked site by chemically bonding together functional groups bonded to thecarbonnanotubes, to thereby form a network structure. Therefore, the size of the cross-linked site for bonding the carbon nanotubes together becomes constant depending on the functional group to be bonded. Since a carbon nanotube has an extremely stable chemical structure, there is a low possibility that functional groups or the like excluding a functional group to modify the carbon nanotube are bonded to the carbon nanotube. In the case where the functional groups are chemically bonded together, the designed structure of the cross-linked site can be obtained, thereby providing a homogeneous carbon nanotube structure.

Furthermore, the functional groups are chemically bonded together, so that the length of the cross-linked site between the carbon nanotubes can be shorter than that in the case where the functional groups are cross-linked together with a cross-linking agent. Therefore, the carbon nanotube structure is dense, and an effect peculiar to a carbon nanotube is easily provided.

In addition, multiple carbon nanotubes construct a network structure through multiple cross-linked sites in the carbon nanotube structure of the present invention. As a result, excellent characteristics of a carbon nanotube can be stably used unlike a material such as a mere carbon nanotube dispersion film or resin dispersion film in which carbon nanotubes are only accidentally in contact with each other and are substantially isolated from each other.

The chemical bonding of the multiple functional groups together is preferably one selected from -COOCO-, -O-, -NHCO-, -COO-, and -NCH - in a condensation reaction. The chemical bonding is preferably at least one selected from -NH-, -S-, and -O- in a substitution reaction. The chemical bonding is preferably -NHCOO- in an addition reaction. The chemical bonding is preferably -S-S- in an oxidative reaction.

Examples of the functional group to be bonded to a carbon nanotube prior to the reaction include -OH, -COOH, -COOR (where R represents a substituted or unsubstituted hydrocarbon group), -X, -COX (where X represents a halogen atom), -SH, -CHO, -OSO₂CH₃, -OSO₂(C₆H₄)CH₃, -NH₂, and -NCO. It is preferable to select at least one functional group from the group consisting of the above functional groups.

Particularly preferable examples of the functional group include -COOH. A carboxyl group can be relatively easily introduced intoacarbonnanotube. In addition, the resultant substance (carbon nanotube carboxylic acid) has high reactivity, easily prompts a condensation reaction by using a dehydration condensation agent such as N-ethyl-N'-(3-dimethylaminopropyl)carbodiimide, and thus is suitable for forming a carbon nanotube structure.

Themultiplecarbonnanotubesareeachparticularlypreferably a multi-wall carbon nanotube having high electrical conductivity for providing stable electrical connection.

### (Manufacturing Method)

In the meantime, a method of manufacturing an electrical member of the present invention includes the steps of: supplying a base body surface with a solution containing multiple carbon nanotubes to which multiple functional groups are bonded; and mutually cross-linkingthemultiplecarbonnanotubesthroughchemicalbonding of the multiple functional groups together to construct a network structure constituting a carbon nanotube structure as an electrical contact. An electrical device of the present invention can be manufactured through the step of packaging a first electrode composed of the electrical member and a second electrode so that the second electrode can contact with and separate from an electrical contact of the first electrode.

According to the present invention, in the step of supplying the base body surface with a solution containing carbon nanotubes to which functional groups are bonded (hereinafter, simply referred to as "cross-linking solution" in some cases), a structure (in the form of a film, a layer, a block, or the like) is first formed with the cross-linking solution on the whole surface of the base body or a part of the surface of the base body. Then, in the subsequent cross-linking step, the structure after the supply is cured to form a carbon nanotube structure in which the multiple carbon nanotubes are mutually cross-linked to construct a network structure. The carbon nanotube structure is then used as an electrical contact. Following those two steps can stabilize the structure itself of the carbon nanotube structure on the surface of the base body.

The supplying step may be a step of applying a cross-linking solution to a base body surface. Known techniques of applying a solution to a base body such as direct dropping, screen printing, and spin coating can be selected.

A patterning step is preferably further provided for patterning a layer of the carbon nanotube structure (hereinafter, maybe referred to carbon nanotube structure layer) to a pattern corresponding to an electrical contact when a fine electrical contact is formed. The structure itself of the carbon nanotube structure layer has been already stabilized in the cross-linking step. This stable carbon nanotube structure layer is patterned, and thus, the carbon nanotube structure layer can be patterned into a pattern corresponding to an electrical contact without concern of troubles such as scattering of the carbon nanotube in the patterning step. Further, a film itself of the carbon nanotube structure layer is structured, and connection between the carbon nanotubes is ensured. Thus, an electrical contact using the characteristics of a carbon nanotube can be formed.

In forming chemical bonding of functional groups together, a first method preferable for forming a cross-linked site is a method of cross-linking the multiple functional groups together with a cross-linking agent in the solution. More preferably, the cross-linking agent is not self-polymerizable.

In the method of manufacturing an electrical member and electrical device of the present invention, examples of the functional group include -OH, -COOH, -COOR (where R represents a substituted or unsubstituted hydrocarbon group), -COX (where X represents a halogen atom), -NH₂, and -NCO. It is preferable to select at least one functional group from the group consisting of the above functional groups. In such a case, a cross-linking agent, which may prompt a cross-linking reaction with the selected functional group, is selected as the cross-linking agent.

Further, preferable examples of the cross-linking agent include a polyol, a polyamine, a polycarboxylic acid, a polycarboxylate, a polycarboxylic acid halide, a polycarbodiimide, and a polyisocyanate. It is preferable to select at least one cross-linking agent from the group consisting of the above cross-linking agents. In such a case, a functional group, which may prompt a cross-linking reaction with the selected cross-linking agent, is selected as the functional group.

At least one functional group and at least one cross-linking agent are preferably selected respectively from the group consisting of the functional groups exemplified as the preferable functional groups and the group consisting of the cross-linking agents exemplified as the preferable cross-linking agents, so that a combination of the functional group and the cross-linking agent may prompt a cross-linking reaction.

Particularly preferable examples of the functional group include -COOR (where R represents a substituted or unsubstituted hydrocarbon group). A carboxyl group can be introduced into a carbon nanotube with relative ease, and the resultant substance (carbon nanotube carboxylic acid) has high reactivity. Therefore, it is relatively easy to esterify the substance to convert its functional group into -COOR (where R represents a substituted or unsubstituted hydrocarbon group) after the formation of the substance. The functional group easily prompts a cross-linking reaction, and is suitable for the formation of a carbon nanotube structure.

In addition, a polyol can be exemplified as the cross-linking agent corresponding to the functional group. A polyol is cured by a reaction with -COOR (where R represents a substituted or unsubstituted hydrocarbon group) to easily form a robust cross-linked substance. Among polyols, each of glycerin and ethylene glycol reacts with the above functional groups well. Moreover, each of glycerin and ethylene glycol itself is highly biodegradable, and provides a low environmental load.

Further, a second method preferable for forming a cross-linked site is a method of chemically bonding multiple functional groups together.

By following the second method, the size of the cross-linked site for bonding the carbon nanotubes together becomes constant depending on the functional group to be bonded. Since a carbon nanotube has an extremely stable chemical structure, there is a low possibility that functional groups or the like excluding a functional group to modify the carbon nanotube are bonded to the carbon nanotube. In the case where the functional groups are chemically bonded together, the designed structure of the cross-linked site can be obtained, thereby providing a homogeneous carbon nanotube structure.

Furthermore, the functional groups are chemically bonded together, so that the length of the cross-linked site between the carbon nanotubes can be shorter than that in the case where the functional groups are cross-linked together with a cross-linking agent. Therefore, the carbon nanotube structure is dense, and tends to readily provide an effect peculiar to a carbon nanotube.

A reaction for chemically bonding the functional groups is particularly preferably any one of a condensation reaction, a substitution reaction, an addition reaction, and an oxidative reaction.

The multiple carbon nanotubes to be used in the method of manufacturing an electrical member and electrical device of the present invention are each preferably a multi-wall carbon nanotube having high electrical conductivity. This is because when functional groups are bonded, an inner graphene sheet structure destroys to a small extent, and thus the characteristics of a carbon nanotube hardly deteriorate.

### Brief Description of the Drawings

Preferred embodiments of the present invention will be described in detail based on the following figures, wherein:

Fig. 1A is schematic sectional diagram of a base body surface during a manufacturing process for explaining an example of a method of manufacturing an electrical switch as an embodiment of the present invention, showing a state of the base body surface after a cross-linking step;

Fig. 1B is a schematic sectional diagram of a base body surface during a manufacturing process for explaining an example of a method of manufacturing an electrode as an embodiment of the present invention, showing a state of the base body surface after formation of a resist layer 16 on the whole surface having a carbon nanotube structure layer 14 formed;

Fig. 1C is a schematic sectional diagram of a base body surface during a manufacturing process for explaining an example of a method of manufacturing an electrode as an embodiment of the present invention, showing a state of the base body surface after a resist layer forming step from which a non-light exposed portion of the resist layer 16 on the whole surface is removed;

Fig. 1D is a schematic sectional diagram of a base body surface during a manufacturing process for explaining an example of a method of manufacturing an electrode as an embodiment of the present invention, showing a state of the base body surface after a removal step from which a carbon nanotube structure layer of an exposed portion is removed;

Fig. 1E is a schematic sectional diagram of a base body surface during a manufacturing process for explaining an example of a method of manufacturing an electrode as an embodiment of the present invention, showing a state of the base body surface after a resist layer peeling step (after a patterning step) . Further, Fig. 1E shows an electrode (electrical member) obtained through the manufacturing process;

Fig. 2A is a schematic sectional diagram for explaining an application of a method of manufacturing an electrode as an embodiment of the present invention, showing a state of a carbon nanotube structure layer 24 formed on the surface of a temporary substrate 22;

Fig. 2B is a schematic sectional diagram for explaining an application of a method of manufacturing an electrode as an embodiment of the present invention, showing a base body 28 move toward the temporary substrate 22 with an adhesive side of the base body 28 facing a side of the temporary substrate 22 having the carbon nanotube structure layer 24 formed;

Fig. 2C is a schematic sectional diagram for explaining an application of a method of manufacturing an electrode as an embodiment of the present invention, showing a state of the base body 28 and the temporary substrate 22 attached through the carbon nanotube structure layer 24;

Fig. 2D is a schematic sectional diagram for explaining an application of a method of manufacturing an electrode as an embodiment of the present invention, showing the carbon nanotube structure layer 24 transferred to the adhesive side of the base body 28 after being peeled off from the temporary substrate 22;

Fig. 3 shows a reaction scheme for synthesis of carbon nanotube carboxylic acid in (Addition Step) of Example 1;

Fig. 4 shows a reaction scheme for esterification in (addition step) of Example 1;

Fig. 5 shows a reaction scheme for cross-linking through an ester exchange reaction in (Cross-linking Step) of Example 1;

Fig. 6A is a plan view of a silicon wafer 12 having a carbon nanotube structure layer 14 and a resist layer formed for explaining a shape of a portion of the resist layer 16 to remain, showing the silicon wafer 12 seen from a side of the resist layer 16;

Fig. 6B is a plan view of a substrate seen from a side of the resist layer on the substrate after a removal step in Example 1;

Fig. 7 is a plan view after resist removal in Example 1;

Fig. 8 is a graph showing results of measuring current-voltage characteristics of a carbon nanotube structure layer formed in Example 1 and a deposition layer formed in Comparative Example 1;

Fig. 9 is a schematic diagram showing an electrical switch as an embodiment of the present invention;

Fig. 10A is a schematic diagram showing an electrical rotary switch as an embodiment of the present invention, which is a plan view showing a rotary switch consisting of an insulating support plate 17 of ceramics or the like fixed with multiple electrical contacts 14; and

Fig. 10B is a schematic diagram showing an electrical rotary switch as an embodiment of the present invention, showing a sectional diagram of Fig. 10A along B-B.

### Detailed Description of the Preferred Embodiment

Hereinafter, the present invention will be specifically described through a description of an embodiment. In the following description, an electrical switch as an example of an electrical device employing an electrode as an example of an electrical member and a method of manufacturing the electrical switch are described separately.

### [Electrical Switch]

An electrical switch 60 as an example of an electrical device of the present invention has a feature that an electrical contact has a carbon nanotube structure having a network structure constructed by mutually cross-linking multiple carbon nanotubes.

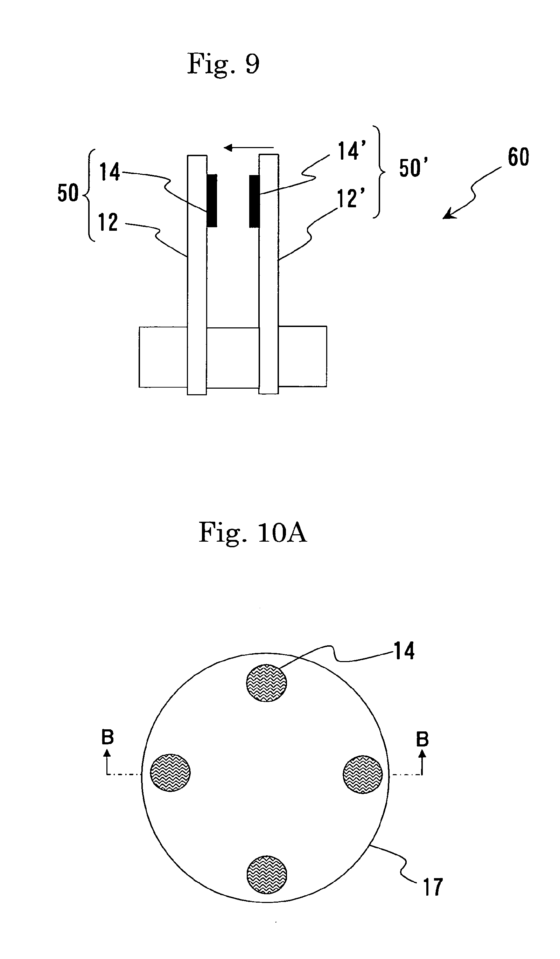

Fig. 9 shows an example of the structure of the electrical switch 60.

In Fig. 9, the electrical switch 60 consists of: a movable piece (first electrode) 50' including an electrical contact 14' fixed on a base body 12'; and a fixed piece (second electrode) 50 including an electrical contact 14 fixed on a base body 12. The electrical contacts 14 and 14' used herein each employ a carbon nanotube structure layer described later. The movable piece 50' moves to a direction of an arrow and to a direction opposite to the arrow for switching on and off. That is, the movable piece 50' is moved to the direction of an arrow by a not-shown magnet and the electrical contact 14 is brought in contact with the electrical contact 14', thereby connecting an electrical path between the movable piece 50' and the fixed piece 50. On the other hand, the movable piece 50' is moved to the direction opposite to the arrow as in Fig. 9, thereby disconnecting the electrical path.

In the electrical switch of the embodiment of the present invention, as described later, the electrical contact has a carbon nanotube structure layer having a network structure constructed by mutually cross-linking multiple carbon nanotubes. Further, the cross-linking agent is not self-polymerizable, thereby forming a highly dense network having uniform characteristics. Thus, the electrical contact is hardly deteriorated through surface oxidation and has excellent electrical conductivity, thereby improving stability of electrical connection of the electrical switch.

A method of patterning, if required for a carbon nanotube structure, is determined by the shape of a base body. A carbon nanotube structure layer may be patterned directly on a base body surface. Alternatively, a base body and a patterned carbon nanotube structure layer carried on the base body may be attached together onto a second base body, or the patterned carbon nanotube structure layer alone may be transferred to the second base body.

A base body to have an electrical contact for an electrical switch formed is not particularly limited. Metals, conductive plastics, conductive ceramics, conductive semiconductors, or the like can be used.

### <Carbon Nanotube Structure>

In the present invention, the term "carbon nanotube structure" refers to a structure having a network structure constructed by mutually cross-linking multiple carbon nanotubes. Provided that a carbon nanotube structure can be formed in such a manner that carbon nanotubes are mutually cross-linked to construct a network structure, the carbon nanotube structure may be formed through any method. However, the carbon nanotube structure is preferably manufactured through a method of manufacturing an electrical device of the present invention described later for easy manufacture, a high-performance electrical contact, and easy uniformization and control of characteristics.

A first structure for the carbon nanotube structure employed as an electrical contact manufactured through the method of manufacturing an electrical device of the present invention described later is manufactured by curing a solution (cross-linking solution) containing carbon nanotubes having functional groups and a cross-linking agent that prompts a cross-linking reaction with the functional groups, to prompt a cross-linking reaction between the functional groups of the carbon nanotubes and the cross-linking agent, to thereby form a cross-linked site. Furthermore, a second structure for the carbon nanotube structure is manufactured by chemically bonding together functional groups of carbon nanotubes to form cross-linked sites.

Hereinafter, the carbon nanotube structure layer in the electrical contact for the electrical member and electrical device of the present invention will be described by way of examples of the manufacturing method. Unless otherwise stated, the structures of cross-linked sites are not considered.

### (Carbon Nanotube)

Carbon nanotubes, which are the main component in the present invention, may be single-wall carbon nanotubes or multi-wall carbon nanotubes each having two or more layers. Whether one or both types of carbon nanotubes are used (and, if only one type is used, which type is selected) may be decided appropriately taking into consideration the use of the electrical member or the cost.

The carbon nanotube structure layer employed as an electrical contact preferably contains a multi-wall carbon nanotube (MWNT) for each of the multiple carbon nanotubes in the layer, for suppressing resistance loss due to wiring. An electrically conductive single-wall carbon nanotube (SWNT) can also be used, but SWNT is manufactured as a mixture of semiconductive and conductive carbon nanotubes and extraction of the conductive carbon nanotubes is difficult. Thus, MSNT mainly containing conductive carbon nanotubes is preferably used for the carbon nanotube structure layer to serve as an electrical contact.

Carbon nanotubes in the present invention include ones that are not exactly shaped like a tube, such as: a carbon nanohorn (a horn-shaped carbon nanotube whose diameter continuously increases from one end toward the other end) which is a variant of a single-wall carbon nanotube; a carbon nanocoil (a coil-shaped carbon nanotube forming a spiral when viewed in entirety); a carbon nanobead (a spherical bead made of amorphous carbon or the like with its center pierced by a tube); a cup-stacked nanotube; and a carbon nanotube with its outer periphery covered with a carbon nanohorn or amorphous carbon.

Furthermore, carbon nanotubes in the present invention may include ones that contain some substances inside, such as: a metal-containing nanotube which is a carbon nanotube containing metal or the like; and a peapod nanotube which is a carbon nanotube containing a fullerene or a metal-containing fullerene.

As described above, in the present invention, it is possible to employ carbon nanotubes of any form, including common carbon nanotubes, variants of the common carbon nanotubes, and carbon nanotubes with various modifications, without a problem in terms of reactivity. Therefore, the concept of "carbon nanotube" in the present invention encompasses all of the above.

Those carbon nanotubes are conventionally synthesized through a known method such as arc discharge, laser ablation, or CVD, and the present invention can employ any of the methods. However, arc discharge in a magnetic field is preferable from the viewpoint of synthesizing a highly pure carbon nanotube.

A diameter of carbon nanotubes used in the present invention is preferably 0.3 nm or more and 100 nm or less. A diameter of the carbon nanotubes exceeding this upper limit undesirably results in difficult and costly synthesis. A more preferable upper limit of the diameter of a carbon nanotubes is 30 nm or less.

In general, the lower limit of the carbon nanotube diameter is about 0.3 nm from a structural standpoint. However, too small a diameter could undesirably lower the synthesis yield. It is therefore preferable to set the lower limit of the carbon nanotube diameter to 1 nm or more, more preferably 10 nm or more.

The length of carbon nanotubes used in the present invention is preferably 0.1 µm or more and 100 µm or less. A length of the carbon nanotubes exceeding this upper limit undesirably results in difficult synthesis or requires a special synthesis method raising cost. On the other hand, a length of the carbon nanotubes falling short of this lower limit undesirably reduces the number of cross-link bonding points per carbon nanotube. A more preferable upper limit of the carbon nanotube length is 10 µm or less, and a more preferable lower limit of the carbon nanotube length is 1 µm or more.

The appropriate carbon nanotube content in the cross-linking solution varies depending on the length and thickness of carbon nanotubes, whether single-wall carbon nanotubes or multi-wall carbon nanotubes are used, the type and amount of functional groups in the carbon nanotubes, the type and amount of cross-linking agent or of an additive for bonding functional groups together, the presence or absence of a solvent or other additive used and, if one is used, the type and amount of the solvent or additive, etc. The carbon nanotube content in the solution should be high enough to form a satisfactory carbon nanotube structure after curing but not excessively high because the applicability deteriorates.

Specifically, the ratio of carbon nanotubes to the entire cross-linking solution excluding the mass of the functional groups is 0.01 to 10 g/l, preferably 0.1 to 5 g/l, and more preferably 0.5 to 1.5 g/l, although the ranges cannot be determined uniquely if the parameters are different as described above.

The purity of the carbon nanotubes to be used is desirably raised by purifying the carbon nanotubes before preparation of the cross-linking solution if the purity is not high enough. In the present invention, the higher the carbon nanotube purity, the better the result can be. Specifically, the purity is preferably 90% or higher, more preferably 95% or higher. Low purity causes the cross-linking agent to cross-link with carbon products such as amorphous carbon and tar, which are impurities. This could change the cross-linking distance between carbon nanotubes, and desired characteristics may not be obtained. A purification method for carbon nanotubes is not particularly limited, and any known purification method can be employed.

Such carbon nanotubes are used for the formation of a carbon nanotube structure with predetermined functional groups added to the carbon nanotubes. A preferable functional group to be added at this time varies depending on whether the carbon nanotube structure is formed through the first method or second method described above (a preferable functional group in the former case is referred to as "functional group 1", and a preferable functional group in the latter case is referred to as "functional group 2").

How functional groups are introduced into carbon nanotubes will be described in the section below titled (Method of Preparing Cross-linking Solution).
Hereinafter, components that can be used for the formation of a carbon nanotube structure will be described for the respective first and second methods.

### (Case of First Method)

In the first method in which a cross-linked site is formed using a cross-linking agent, carbon nanotubes can have any functional group to be connected thereto without particular limitations, as long as functional groups selected can be added to the carbon nanotubes chemically and can prompt a cross-linking reaction with any type ofcross-linkingagent. Specific examples of such functional groups include -COOR, -COX, -MgX, -X (where X represents halogen), -OR, -NR¹R², -NCO, -NCS, -COOH, -OH, -NH₂, -SH, -SO₃H, -R"CH₂OH, -CHO, -CN, -COSH, -SR, -SiR'₃ (In the above formulae, R, R¹, R², R', and R" each independently represent a substituted or unsubstituted hydrocarbon group. R, R¹, R², and R' are each a monovalent hydrocarbon group and are each preferably independently selected from -CₙH₂ₙ₋₁ and -CₙH₂ₙ₊₁ (n represents an integer of 1 to 10).. Of those, a methyl group or an ethyl group is more preferable for each of R, R¹, R², and R'. R" is a divalent hydrocarbon group and is preferably selected from -CₙH₂ₙ- (n represents an integer of 1 to 10). Of those, a methylene group or an ethylene group is more preferable for R' ' . ) . Note that the functional groups are not limited to those examples.

Of those, it is preferable to select at least one functional group from the group consisting of -OH, -COOH, -COOR (In the formulae, R represents a substituted or unsubstituted hydrocarbon group. R is preferably selected from -CₙH₂ₙ₋₁ and -CₙH₂ₙ₊₁ (n represents an integer of 1 to 10). Of those, a methyl group or an ethyl group is more preferable.), -COX (where X represents a halogen atom), -NH₂, and -NCO. In that case, a cross-linking agent, which can prompt a cross-linking reaction with the selected functional group, is selected as the cross-linking agent.

In particular, -COOR (R is the same as that described above) is particularly preferable. This is because a carboxyl group can be introduced into a carbon nanotube with relative ease, because the resultant substance (carbon nanotube carboxylic acid) can be easily introduced as a functional group by esterifying the substance, and because the substance has good reactivity with a cross-linking agent.

R in the functional group -COOR is a substituted or unsubstituted hydrocarbon group, and is not particularly limited. However, R is preferably an alkyl group having 1 to 10 carbon atoms, more preferably an alkyl group having 1 to 5 carbon atoms, and particularly preferably a methyl group or an ethyl group in terms of reactivity, solubility, viscosity, and ease of use as a solvent for a cross-linking solution.

The amount of functional groups introduced cannot be determined uniquely because the amount varies depending on the length and thickness of a carbon nanotube, whether the carbon nanotube is of a single-wall type or a multi-wall type, the type of a functional group, the use of the electrical member, etc. From the viewpoint of the strength of the cross-linked substance obtained, namely, the strength of the carbon nanotube structure, a preferable amount of functional groups introduced is large enough to add two or more functional groups to each carbon nanotube. How functional groups are introduced into carbon nanotubes will be described in the section below titled [Method of Manufacturing Electrical Device].

### (Cross-linking Agent)

A cross-linking agent is an essential ingredient for the cross-linking solution. Any cross-linking agent can be used as long as the cross-linking agent is capable of prompting a cross-linking reaction with the functional groups of the carbon nanotubes. In other words, the type of cross-linking agent that can be selected is limited to a certain degree by the types of the functional groups. Also, the conditions of curing (heating, UV irradiation, visible light irradiation, air setting, etc. ) as a result of the cross-linking reaction are naturally determined by the combination of those parameters.

Specific examples of the preferable cross-linking agent include a polyol, a polyamine, a polycarboxylic acid, a polycarboxylate, apolycarboxylic acid halide, apolycarbodiimide, and a polyisocyanate. It is preferable to select at least one cross-lining agent from the group consisting of the above cross-linking agents. In that case, a functional group which can prompt a reaction with the cross-linking agent is selected as the functional group.

At least one functional group and at least one cross-linking agent are particularly preferably selected respectively from the group consisting of the functional groups exemplified as the preferable functional groups and the group consisting of the cross-linking agents exemplified as the preferable cross-linking agents, so that a combination of the functional group and the cross-linking agent may prompt a cross-linking reaction with each other. The following Table 1 lists the combinations of the functional group of the carbon nanotubes and the corresponding cross-linking agent, which can prompt a cross-linking reaction, along with curing conditions of the combinations.

**Table 1**

| Functional group of carbon nanotube | Cross-linking agent | Curing condition |
|---|---|---|
| -COOR | Polyol | heat curing |
| -COX | Polyol | heat curing |
| -COOH | Polyamine | heat curing |
| -COX | Polyamine | heat curing |
| -OH | Polycarboxylate | heat curing |
| -OH | Polycarboxylic acid halide | heat curing |
| -NH₂ | Polycarboxylic acid | heat curing |
| -NH₂ | Polycarboxylic acid halide | heat curing |
| -COOH | Polycarbodiimide | heat curing |
| -OH | Polycarbodiimide | heat curing |
| -NH₂ | Polycarbodiimide | heat curing |
| -NCO | Polyol | heat curing |
| -OH | Polyisocyanate | heat curing |
| -COOH | Ammonium complex | heat curing |
| -COOH | Hydroquinone | heat curing |
| *where R represents a substituted or unsubstituted hydrocarbon group | | |
| *where X represents a halogen | | |

Of those combinations, preferable is the combination of -COOR (R represents a substituted or unsubstituted hydrocarbon group. R is preferably selected from -CₙH₂ₙ₋₁ and -CₙH₂ₙ₊₁ (n represents an integer of 1 to 10). Of those, a methyl group or an ethyl group is more preferable.) with good reactivity on a functional group side and a polyol, which form a robust cross-linked substance with ease. The term "polyol" in the present invention is a genetic name for organic compounds each having two or more OH groups. Of those, one having 2 to 10 (more preferably 2 to 5) carbon atoms and 2 to 22 (more preferably 2 to 5) OH groups is preferable in terms of cross-linkability, solvent compatibility when an excessive amount thereof is charged, treatability of waste liquid after a reaction by virtue of biodegradability (environmental suitability), yield of polyol synthesis, and so on. In particular, the number of carbon atoms is preferably lower within the above range because a gap between carbon nanotubes in the resultant carbon nanotube structure can be narrowed to bring the carbon nanotubes into substantial contact with each other (to bring the carbon nanotubes close to each other). Specifically, glycerin and ethylene glycol are particularly preferable, and one or both of glycerin and ethylene glycol are preferably used as a cross-linking agent.

From another perspective, the cross-linking agent is preferably a not self-polymerizable cross-linking agent. In addition to glycerin and ethylene glycol as examples of the polyols, butenediol, hexynediol, hydroquinone, and naphthalenediol are obviously not self-polymerizable cross-linking agents. More generally, a prerequisite for the not self-polymerizable cross-linking agent is to be without a pair of functional groups, which can prompt a polymerization reaction with each other, in itself . On the other hand, examples of a self-polymerizable cross-linking agent include one that has a pair of functional groups, which can prompt a polymerization reaction with each other (alkoxide, for example), in itself.

According to a method of manufacturing an electrical member and electrical device of the present invention, the first method may involve: further including a solvent in the solution used in the supplying step and containing the multiple carbon nanotubes to which the functional groups are bonded and the cross-linking agent; and supplying the base body surface with the resultant solution. The cross-linking agent may also serve as the solvent depending on type of the cross-linking agent.

Formation of a carbon nanotube structure only involves: supplying the base body surface with the multiple carbon nanotubes to which functional groups are bonded and the cross-linking agent (the supplying step in the method of manufacturing an electrical member or electrical device of the present invention) ; and chemically bonding the functional groups together to form a cross-linked site (the cross-linking step in the method of manufacturing an electrical member or electrical device of the present invention). In supplying the base body surface with the multiple carbon nanotubes to which functional groups are bonded and the cross-linking agent, the base body surface is preferably supplied with a solution (cross-linking solution) containing the carbon nanotubes, the cross-linking agent, and a solvent. In particular, the solution is applied as a cross-linking application liquid to form a cross-linked substance film, for a simple, low cost operation in a short period of time.

### (Case of second method)

In the second method in which a cross-linked site of a carbon nanotube structure is formed by mutually cross-linking multiple functional groups bonded to carbon nanotubes each having at least one end different through chemical bonding of the functional groups, to thereby construct a network structure. The functional group to be bonded to the carbon nanotubes is not particularly limited as long as the functional group can be chemically added to the carbon nanotubes and is capable of reacting with each other using any type of additive. Specific examples of the functional group include -COOR, -COX, -MgX, -X (where X represents a halogen), -OR, -NR¹R², -NCO, -NCS, -COOH, -OH, -NH₂, -SH, -SO₃H, -R''CH₂OH, -CHO, -CN, -COSH, -SR, -SiR'₃ (In the above formulae, R, R¹, R², R', and R" each independently represent a substituted or unsubstituted hydrocarbon group. R, R¹, R², and R' are each a monovalent hydrocarbon group and are preferably independently selected from -CₙH₂ₙ₋₁ and -CₙH₂ₙ₊₁ (n represents an integer of 1 to 10). Of those, a methyl group or an ethyl group is more preferable for each of R, R¹, R², and R'. R'' is a divalent hydrocarbon group and is preferably selected from -CₙH₂ₙ- (n represents an integer of 1 to 10) . Of those, a methylene group or an ethylene group is more preferable for R''.). However, the functional group is not limited to those.

A reaction for chemically bonding the functional groups together is particularly preferably dehydration condensation, a substitution reaction, an addition reaction, or an oxidative reaction. The functional groups preferable for the respective reactions out of the above functional groups are exemplified below.

According to a method of manufacturing an electrical member and electrical device of the present invention, the second method may involve: preparing a supply solution (cross-linking solution) used in the supplying step by including the multiple carbon nanotubes having the functional groups bonded and the additive as required in a solvent; and supplying the base body surface with the resultant solution.

When the reaction for chemically bonding the functional groups together is dehydration condensation, a condensation agent is preferably added as the additive. Specific examples of preferable condensation agents include an acid catalyst and a dehydration condensation agent such as sulfuric acid, N-ethyl-N'-(3-dimethylaminopropyl)carbodiimide, and dicyclohexyl carbodiimide. It is preferable to select at least one condensation agent from the group consisting of the above. In that case, the functional groups, which can prompt a reaction among the functional groups with the help of the selected condensation agent, are selected as the functional groups.

The functional groups to be used in dehydration condensation are preferably at least one functional group selected from the group consisting of -COOR (R represents a substituted or unsubstituted hydrocarbon group and is preferably selected from -CₙH₂ₙ₋₁ and -CₙH₂ₙ₊₁ (n represents an integer of 1 to 10) . Of those, a methyl group or an ethyl group is more preferable.), -COOH, -COX (where X represents a halogen atom), -OH, -CHO, and -NH₂.

Examples of the functional group particularly preferable for use in dehydration condensation include -COOH. Introduction of a carboxyl group into carbon nanotubes is relatively easy, and the resultant substance (carbon nanotube carboxylic acid) has high reactivity. Therefore, functional groups for forming a network structure can be easily introduced into multiple sites of one carbon nanotube. Moreover, the functional group is suitable for formation of a carbon nanotube structure because the functional group is easily subjected to dehydration condensation. If the functional group to be used in dehydration condensation is -COOH, sulfuric acid, N-ethyl-N'-(3-dimethylaminopropyl)carbodiimide, and dicyclohexyl carbodiimide described above are particularly preferable condensation agents.

When the reaction for chemically bonding the functional groups together is a substitution reaction, a base is preferably added astheadditive. A base that can be added is not particularly limited, and may be any base as long as the base is selected depending on the acidity of a hydroxyl group.

Specific preferable examples of the base include sodium hydroxide, potassium hydroxide, pyridine, and sodium ethoxide. It is preferable to select at least one base from the group consisting of the above bases. In that case, functional groups, which can prompt a substitution reaction among the functional groups with the help of the selected base, are selected as the functional groups. In addition, the functional groups at this time are preferably at least one functional group selected from the group consisting of -NH₂, -X (where X represents a halogen atom), -SH, -OH, -OSO₂CH₃, and -OSO₂(C₆H₄)CH₃.

When the reaction for chemically bonding the functional groups together is an addition reaction, anadditive is not always necessary. The functional groups at this time are preferably -OH and/or -NCO.

When the reaction for chemically bonding the functional groups together is an oxidative reaction, an additive is not always necessary either. However, an oxidative reaction accelerator is preferably added as the additive. An example of the oxidative reaction accelerator that can be suitably added is iodine. In addition, the functional groups at this time are preferably -SH.

Further, it is also possible to bond a molecule, which partially contains those functional groups, with the carbon nanotubes to be chemically bonded at a preferable functional group portion exemplified above. Even in this case, a functional group with a large molecular weight to be bonded to the carbon nanotubes is bonded as intended, enabling control of a length of the cross-linked site.

In chemically bonding the functional groups together, an additive that can form the chemical bonding among the functional groups can be used. Any additive that is capable of causing the functional groups of the carbon nanotubes to react with each other can be used as such an additive. In other words, the type of additive that can be selected is limited to a certain degree by the types of the functional groups and the reaction. Also, the condition of curing (heating, UV irradiation, visible light irradiation, air setting, etc.) as a result of the reaction is naturally determined by the combination of those parameters.

It is preferable to select at least two functional groups from the group consisting of the functional groups exemplified as preferable functional groups so that a combination of the selected functional groups is capable of prompting a mutual reaction. Table 2 below lists functional groups (A) and (B) of carbon nanotubes capable of prompting a mutual cross-linking reaction and the names of corresponding reactions.

**Table 2**

| Cross-linked site | Functional group of carbon nanotube(A) | Functional group of carbon nanotube (B) | Reaction |
|---|---|---|---|
| -COOCO- | -COOH | - | Dehydration condensation |
| -S-S- | -SH | - | Oxidative reaction |
| -O- | -OH | - | Dehydration condensation |
| -NH-CO- | -COOH | - NH₂ | Dehydration condensation |
| -COO- | -COOH | -OH | Dehydration condensation |
| -COO- | -COOR | -OH | Dehydration condensation |
| -COO- | -COX | -OH | Dehydration condensation |
| -CH=N- | -CHO | -NH₂ | Dehydration condensation |
| -NH- | -NH₂ | -X | reaction |
| -S- | -SH | -X | Substitution reaction |
| -O- | -OH | -X | Substitution reaction |
| -O- | -OH | -OSO₂CH₃ | Substitution reaction |
| -O- | -OH | -OSO₂(C₆H₄)CH₃ | Substitution reaction |
| -NH-COO- | -OH | -N=C=O | Addition reaction |
| *where R represents a substituted or unsubstituted hydrocarbon group | | | |
| *where X represents a halogen | | | |

Formation of a carbon nanotube structure only involves: supplying the base body surface with the multiple carbon nanotubes to which functional groups are bonded and the additive as required (supplying step in the method of manufacturing an electrical member or electrical device of the present invention); and chemically bonding the functional groups together to form a cross-linked site (cross-linking step in the method of manufacturing an electrical member or electrical device of the present invention). In supplying the base body surface with the multiple carbon nanotubes to which functional groups are bonded, the base body surface is preferably supplied with a solution (cross-linking solution) containing the carbon nanotubes and a solvent. In particular, the solution is applied as a cross-linking application liquid to form a cross-linked substance film, for simple formation of the electrical member or electrical device of the present invention at a low cost and in a short period of time.

### (Other Additive)

The cross-linking solution (included in both the first method and the second method) may contain various additives including a solvent, a viscosity modifier, a dispersant, and a cross-linking accelerator. A solvent is added when satisfactory applicability of the cross-linking solution is not achieved with solely the cross-linking agent or the additive for bonding the functional groups. A solvent that can be employed is not particularly limited, and may be appropriately selected according to the type of the cross-linking agent or the additive forbonding the functional groups. Specific examples of such a solvent include: organic solvents such as methanol, ethanol, isopropanol, n-propanol, butanol, methyl ethyl ketone, toluene, benzene, acetone, chloroform, methylene chloride, acetonitrile, diethyl ether, and tetrahydrofuran (THF); water; acidic aqueous solutions; and alkaline aqueous solutions. A solvent as such is added in an amount that is not particularly limited but determined appropriately by taking into consideration the applicability of the cross-linking solution.

A viscosity modifier is added when sufficient applicability is not achieved with solely the cross-linking agent or the additive for bonding the functional groups. A viscosity modifier that can be employed is not particularly limited, and may be appropriately selected according to the type of cross-linking agent or the additive for bonding the functional groups. Specific examples of such a viscosity modifier include methanol, ethanol, isopropanol, n-propanol, butanol, methyl ethyl ketone, toluene, benzene, acetone, chloroform, methylene chloride, acetonitrile, diethyl ether, and THF.

Some of those viscosity modifiers serve as a solvent when added in a certain amount, but it is meaningless to clearly distinguish the viscosity modifier from the solvent. A viscosity modifier as such is added in an amount that is not particularly limited but determined appropriately by taking into consideration the applicability.

A dispersant is added in order to maintain the dispersion stability of the carbon nanotubes, the cross-linking agent, or the additive for bonding the functional groups in the cross-linking solution. Various known surfactants, water-soluble organic solvents, water, acidic aqueous solutions, alkaline aqueous solutions, etc. can be employed as a dispersant. However, a dispersant is not always necessary since components themselves of the cross-linking solution have high dispersion stability. In addition, depending on the use of the final electrical member, the presence of impurities such as a dispersant in the carbon nanotube structure may not be desirable. In such a case, a dispersant is not added at all, or is added in a very small amount.

The content of the cross-linking agent or additive for bonding the functional groups in the cross-linking solution varies depending on the type of cross-linking agent (including whether the cross-linking agent is self-polymerizable or not self-polymerizable) or additive for bonding functional groups. The content also varies depending on the length and thickness of carbon nanotubes, whether single-wall carbon nanotubes ormulti-wall carbon nanotubes are used, the type and amount of functional groups in the carbon nanotubes, the presence or absence of a solvent or other additive used and, if one is used, the type and amount of the solvent or additive, etc. Therefore, the content cannot be determined uniquely. In particular, for example, glycerin or ethylene glycol can also provide characteristics of a solvent because a viscosity of glycerin or ethylene glycol is not so high, and thus an excessive amount of glycerin or ethylene glycol can be added.

### <Method of Preparing Cross-linking Solution>

A method of preparing a cross-linking solution is described next. The cross-linking solution is prepared by mixing carbon nanotubes that have functional groups with a cross-linking agent or an additive for bonding functional groups that prompts a cross-linking reaction with the functional groups (mixing step). The mixing step may be preceded by an addition step in which the functional groups are introduced into the carbon nanotubes.

Use of carbon nanotubes having functional groups as starting materials starts the preparation from the mixing step. The use of normal carbon nanotubes themselves as starting materials starts the preparation from the addition step.

### (Addition Step)

The addition step is a step of introducing desired functional groups into carbonnanotubes. How functional groups are introduced varies depending on the type of functional group and cannot be determined uniquely. One method involves adding a desired functional group directly. Another method involves: introducing a functional group that is easily added; and then substituting the whole functional group or a part thereof, or adding a different functional group to the former functional group, in order to obtain the target functional group.

Still another method involves applying a mechanochemical force to a carbon nanotube to break or modify a very small portion of a graphene sheet on the surface of the carbon nanotube, to thereby introduce various functional groups into the broken or modified portion.

Furthermore, functional groups can be relatively easily introduced into cup-stacked carbon nanotubes, which have many defects on the surface upon manufacture, and carbon nanotubes that are formed by vapor phase growth. On the other hand, carbon nanotubes each having a perfect graphene sheet structure exert the carbon nanotube characteristics more effectively and the characteristics are easily controlled. Consequently, it is particularly preferable to use a multi-wall carbon nanotube so that an appropriate number of defects are formed on its outermost layer as electrical contacts to bond functional groups for cross-linking while the inner layers having less structural defects exert the carbon nanotube characteristics.

Operations for the addition step are not particularly limited, and any known method can be employed. Various addition methods disclosed in JP 2002-503204 A may be employed in the present invention depending on the purpose.

A description is given on a method of introducing -COOR (In the formula, R represents a substituted or unsubstituted hydrocarbon group. R is preferably selected from -CₙH₂ₙ₋₁ and -CₙH₂ₙ₊₁ (n represents an integer of 1 to 10) . Of those, a methyl group or an ethyl group is more preferable.), a particularly desirable functional group among the functional groups listed above. To introduce -COOR (where R represents a substituted or unsubstituted hydrocarbon group) into carbon nanotubes, carboxyl groups may be (1) added to the carbon nanotubes once, and then (2) esterified.

### (1) Addition of Carboxyl Group

To introduce carboxyl groups into carbon nanotubes, carboxyl groups are refluxed together with an acid having an oxidizing effect. This operation is relatively easy and is preferable since carboxyl groups with high reactivity can be added to carbon nanotubes. A brief description of the operation is given below.

Examples of an acid having an oxidizing effect include concentrated nitric acid, a hydrogen peroxide solution, a mixture ofsulfuricacidandnitricacid,andaquaregia. Concentratednitric acid is particularly used in concentration of preferably 5 mass% or higher, more preferably 60 mass% or higher.

Anormalrefluxmethodcanbeemployed. Therefluxtemperature is preferably close to the boiling point of the acid used. When concentrated nitric acid is used, for instance, the temperature is preferably set to 120 to 130 °C. The reflux preferably lasts for 30 minutes to 20 hours, more preferably for 1 hour to 8 hours.

Carbon nanotubes to which carboxyl groups are added (carbon nanotube carboxylic acid) are produced in the reaction liquid after the reflux. The reaction liquid is cooled down to room temperature and then is subj ected to a separation operation or washing as required, thereby obtaining the target carbon nanotube carboxylic acid.

### (2) Esterification

The target functional group -COOR (where R represents a substituted or unsubstituted hydrocarbon group and a preferable R is such as that described above) can be introduced by adding an alcohol to the obtained carbon nanotube carboxylic acid and dehydrating the mixture for esterification.

The alcohol used for the esterification is determined according to R in the formula of the functional group. That is, if R is CH₃, the alcohol is methanol, and if R is C₂H₅, the alcohol is ethanol.

A catalyst is generally used in the esterification, and a conventionally known catalyst such as sulfuric acid, hydrochloric acid, or toluenesulfonic acid can be used in the present invention. The use of sulfuric acid as a catalyst is preferable from the viewpoint of not prompting a side reaction in the present invention.

The esterification may be conducted by adding an alcohol and a catalyst to carbon nanotube carboxylic acid and refluxing the mixture at an appropriate temperature for an appropriate time period. A temperature condition and a time period condition in this case depend on type of catalyst, type of alcohol, or the like and cannot be determined uniquely, but a reflux temperature is preferably close to the boiling point of the alcohol used. The reflux temperature is preferably in the range of 60 to 70°C for methanol, for example. Further, a reflux time period is preferably in the range of 1 to 20 hours, more preferably in the range of 4 to 6 hours.

A carbon nanotube with the functional group -COOR (where R represents a substituted or unsubstituted hydrocarbon group and a preferable R is such as that described above) added can be obtained by separating a reaction product from a reaction liquid after esterification and washing the reaction product as required.

### (Mixing Step)

The mixing step is a step of mixing, as required, carbon nanotubes having functional groups with a cross-linking agent prompting a cross-linking reaction with the functional groups or an additive for bonding the functional groups, to thereby prepare the cross-linking solution. In the mixing step, other components described in the aforementioned section titled [Electrical Switch] are mixed, in addition to the carbon nanotubes having functional groups and the cross-linking agent. Then, an amount of a solvent or a viscosity modifier is preferably adjusted considering applicability, to thereby prepare the cross-linking solution (cross-linking application liquid) just before supply (application) to the base body.

Simple stirring with a spatula and stirring with a stirrer of a stirring blade type, a magnetic stirrer, and a stirring pump may be used. However, to achieve higher degree of uniformity in dispersion of the carbon nanotubes to enhance storage stability while fully extending a network structure by cross-linking of the carbon nanotubes, an ultrasonic disperser or a homogenizer may be used for powerful dispersion. However, the use of a stirring device with a strong shear force of stirring such as a homogenizer may cut or damage the carbon nanotubes in the solution, thus the device may be used for a very short period of time.

A carbon nanotube structure is formed by supplying the base body surface with the cross-linking solution described above and curing the cross-linking solution. A supplying method and a curing method are described in detail in the section below titled [Method of Manufacturing Electrical Device].

The carbon nanotube structure in the present invention is in a state in which carbon nanotubes are networked. In detail, the carbon nanotube structure is cured into a matrix form in which carbon nanotubes are connected to each other through cross-linked sites, thereby sufficiently exerting the characteristics of a carbon nanotube itself such as high electron- and hole-transmission characteristics. In other words, the carbon nanotube structure layer has carbon nanotubes that are tightly connected to each other, contains no other binders and the like, and is thus composed substantially only of carbon nanotubes, so that characteristics peculiar to a carbon nanotube are used fully.

A thickness of the carbon nanotube structure layer of the present invention can be widely selected from being very thin to being thick according to an application. Lowering a content of the carbon nanotubes in the cross-linking solution used (simply, lowering the viscosity by diluting) and applying the cross-linking solution as a thin film provide a very thin coat. Similarly, raising a content of the carbon nanotubes provides a thick coat. Further, repeating the application provides an even thicker coat. A very thin coat from a thickness of about 10 nm can be formed, and a thick coat without an upper limit can be formed through recoating. A possible film thickness with one coating is about 5 µm. Further, a coat may have a desired shape by pouring the cross-linking solution having a content or the like adjusted into a mold and bonding.

In forming the carbon nanotube structure according to the first method, a site where the carbon nanotubes are mutually cross-linked, that is, the cross-linked site formed through a cross-linking reaction between the functional groups of the carbon nanotubes and the cross-linking agent has a cross-linking structure. In the cross-linking structure, residues of the functional groups remaining after the cross-linking reaction are connected together with a connecting group, which is a residue of the cross-linking agent remaining after the cross-linking reaction.

As described, the cross-linking agent, which is a component of the cross-linking solution, is preferably not self-polymerizable. A not self-polymerizable cross-linking agent provides the finally formed carbon nanotube structure constructed from a residue of only one cross-linking agent. The gap between the carbon nanotubes to be cross-linked can be controlled to a size of a residue of the cross-linking agent used, thereby providing a desired network structureofthecarbonnanotubeswithhighduplicability. Further, multiple cross-linking agents are not present between the carbon nanotubes, thus enabling enhancement of an actual density of the carbon nanotubes in the carbon nanotube structure. Further, reducing a size of a residue of the cross-linking agent can extremely narrow a gap between each of the carbon nanotubes both electrically and physically (carbon nanotubes are substantially in direct contact with each other).

Formation of the carbon nanotube structure layer with a cross-linking solution prepared by selecting a single functional group of the carbon nanotubes and a single not self-polymerizable cross-linking agent results in the cross-linked site of the layer having an identical cross-linking structure (Example 1). Further, formation of the carbon nanotube structure layer with a cross-linking solution prepared by selecting even multiple types of functional groups of the carbon nanotubes and/or multiple types of not self-polymerizable cross-linking agents results in the cross-linked sites of the layer mainly having a cross-linking structure based on a combination of the functional group and the not self-polymerizable cross-linking agent mainly used (Example 2).

In contrast, formation of the carbon nanotube structure layer with a cross-linking solution prepared by selecting self-polymerizable cross-linking agents, without regard to whether the functional groups of the carbon nanotubes and the cross-linking agents are of single or multiple types, results in the cross-linked sites in the carbon nanotube structure where carbon nanotubes are cross-linked together without a main, specific cross-linking structure. This is because the cross-linked sites will be in a state where numerous connecting groups with different connecting (polymerization) numbers of the cross-linking agents coexist.

In other words, by selecting not self-polymerizable cross-linking agents, the cross-linked sites, where the carbon nanotubes of the carbon nanotube structure cross-link together, have a mainly identical cross-linking structure because a residue of only one cross-linking agent bonds with the functional groups. "Mainly identical" here is a concept including a case where all of the cross-linked sites have an identical cross-linking structure as described above (Example 1), as well as a case where the cross-linking structure based on a combination of the functional group and the not self-polymerizable cross-linking agent mainly used becomes a main structure with respect to the total cross-linked sites as described above (Example 2).

When referring to "mainly identical", a "ratio of identical cross-linked sites" with respect to the total cross-linked sites will not have a uniform lower limit defined. The reason is that a case of giving a functional group or a cross-linking structure with an aim different from formation of a carbon nanotube network may be assumed, for example. However, in order to actualize high electrical or physical characteristics peculiar to carbon nanotubes with a strong network, a "ratio of identical cross-linked sites" with respect to the total cross-linked sites is preferably 50% or more, more preferably 70% or more, further more preferably 90% or more, and most preferably 100%, based on numbers . Thosenumberratios can be determined through, for example, a method of measuring an intensity ratio of an absorption spectrum corresponding to the cross-linking structure with an infrared spectrum.

As described, a carbon nanotube structure layer having the cross-linked site with a mainly identical cross-linking structure where carbon nanotubes cross-link together allows formation of a uniform network of the carbon nanotubes in a desired state. In addition, the carbon nanotube network can be constructed with homogeneous, satisfactory, and expected electrical or physical characteristics and high duplicability.

Further, the connecting group preferably contains hydrocarbon as a skeleton thereof. "Hydrocarbon as a skeleton" here refers to a main chain portion of the connecting group consisting of hydrocarbon, the main portion of the connecting group contributing to connecting together residues of the functional groups of carbon nanotubes to be cross-linked remaining after a cross-linking reaction. A side chain portion, where hydrogen of the main chain portion is substituted by another substituent, is not considered. Obviously, it is more preferable that the whole connecting group consists of hydrocarbon.

The hydrocarbon preferably has 2 to 10 carbon atoms, more preferably 2 to 5 carbon atoms, and further more preferably 2 to 3 carbon atoms. The connecting group is not particularly limited as long as the connecting group is divalent or more.

In the cross-linking reaction of the functional group -COOR (where R represents a substituted or unsubstituted hydrocarbon group, and a preferable R is such as that described above) and ethylene glycol, exemplified as a preferable combination of the functional group of carbon nanotubes and the cross-linking agent, the cross-linked site where multiple carbon nanotubes are mutually cross-linked becomes -COO(CH₂)₂OCO-.

Further, in the cross-linking reaction of the functional group -COOR (where R represents a substituted or unsubstituted hydrocarbon group, and a preferable R is such as that described above) and glycerin, the cross-linked site where multiple carbon nanotubes are mutually cross-linked becomes -COOCH₂CHOHCH₂OCO- or -COOCH₂CH(OCO-)CH₂OH if two OH groups contribute to the cross-linking, and the cross-linked site becomes -COOCH₂CH(OCO-)CH₂OCO- if three OH groups contribute to the cross-linking.

As has been described, the carbon nanotube structure formed through the first method has a network structure composed of multiple carbon nanotubes connected to each other through multiple cross-linked sites. Thus, contact or arrangement of carbon nanotubes remains stable, unlike a mere carbon nanotube dispersion film. Therefore, the carbon nanotube structure stably exerts characteristics peculiar to carbon nanotubes including: electrical characteristics such as high electron- or hole- transmission characteristics; physical characteristics such as thermal conductivity and toughness; and light absorption characteristics.

On the other hand, in forming the carbon nanotube structure through the second method, a site where the multiple carbon nanotubes are mutually cross-linked, that is, a cross-linked site formed by a cross-linking reaction among the functional groups of the multiple carbon nanotubes has a cross-linking structure in which residues of the functional groups remaining after a cross-linking reaction are connected to each other. In this case as well, the carbon nanotube structure has carbon nanotubes connected to each other through a cross-linked site in a matrix form, thereby easily exerting the characteristics of carbon nanotubes itself such as high electron- and hole- transmission characteristics. That is, the carbon nanotube structure has carbon nanotubes that are tightly connected to each other, contains no other binders and the like, and is thus composed substantially only of carbon nanotubes.

Further, the cross-linked sites are formed through directly reacting the functional groups, thus enabling enhancement of the actual density of the carbon nanotubes of the carbon nanotube structure. Further, reducing a size of a functional group can extremely narrow a gap between each of the carbon nanotubes both electrically and physically, thereby easily exerting the characteristics of the carbon nanotube itself.

Further, cross-linked sites are formed by chemical bonding of the functional groups together, and thus, the carbon nanotube structure has a mainly identical cross-linking structure. Therefore, a uniform network of carbon nanotubes can be formed into a desired state. Further, the carbon nanotube structure can be constructed with homogeneous, satisfactory, and expected electrical and physical characteristics and high duplicability.

A layer in addition to the carbon nanotube structure may be formed in the electrical member of the present invention. For example, placing an adhesive layer between the base body surface and the carbon nanotube structure for enhancing adhesiveness therebetween is preferable for improving the adhesive strength of the carbon nanotube structure. A method of forming an adhesive layer and other details will be explained in the section titled [Method of Manufacturing Electrical Device].

As has been described, the electrical contact employed in the electrical switch in an embodiment of the present invention includes a carbon nanotube structure having a network structure composed of multiple carbon nanotubes connected to each other through multiple cross-linked sites. Thus, contact or arrangement of carbon nanotubes remains stable, unlike a mere carbon nanotube dispersion film. A carbon nanotube structure is hardly insulated by oxidation because of its high chemical stability. Therefore, the carbon nanotube structure is tough and flexible and withstands impact of repeated on/off switches, thereby providing satisfactory electrical connection over a long period of time. Further, the carbon nanotube structure layer can be patterned with a high degree of freedom, and thus, may have various shapes as electrical contacts.

The present invention can be applied to an electrical device except an electrical switch employing a known electrical contact. A carbon nanotube structure as an electrical contact may be provided on a wiring pattern of a substrate, and then the carbon nanotube structure may be electrically connected through contact with an electron device such as an integrated circuit. Alternatively, a carbon nanotube structure may be provided on a tip electrode such as an electrical wire, not on a substrate, and then the carbon nanotube structure may be connected to other electrodes or the like. Methods of fixing a contact state include: holding an electrode and a contact in a package; and fixing the same with a crimp fitting.

Further, a contact state may be maintained by bringing an electrical contact in contact with an electrode, and then fixing the whole with a resin or the like.

Alternatively, a composite of a carbon nanotube structure and a polymer can be formed for use. Methods of forming a composite include: a method involving forming a carbon nanotube structure and then combining the carbon nanotube structure with a polymer; and a method involving mixing a monomer during a cross-linking step for bonding the functional groups together bonded to the carbon nanotubes. A specific procedure for the latter method, for example, involves polymerizing glycerin in the presence of a catalyst prompting dehydration and an oxidative reaction such as sulfuric acid while nanotubes modified with carboxylic acid are cross-linked using glycerin as a cross-linking agent. Thus, a highly dense composite of a polyether ketone polymer made from glycerin as a raw material and a carbon nanotube structure is formed, thereby providing an electrical contact having very high hardness and high heat resistance.

### [Method of Manufacturing Electrical Device]

Embodiments of a method of manufacturing an electrical member and electrical device of the present invention will be described by showing a method of manufacturing an electrical switch as an embodiment of an electrical device of the present invention. The method specifically includes: (A) a step of supplying a base body witha solution (cross-linking solution) containing carbonnanotubes having functional groups and, as required, a cross-linking agent prompting a cross-linking reaction with the functional groups or an additive for chemically bonding the functional groups together; and (B) a step of mutually cross-linking the multiple carbon nanotubes by curing the supplied solution to form a carbon nanotube structure layer having a network structure, which is used as an electrical contact.

The method may further include other steps such as (C) a step of patterning the carbon nanotube structure layer to a pattern corresponding to an electrical contact.

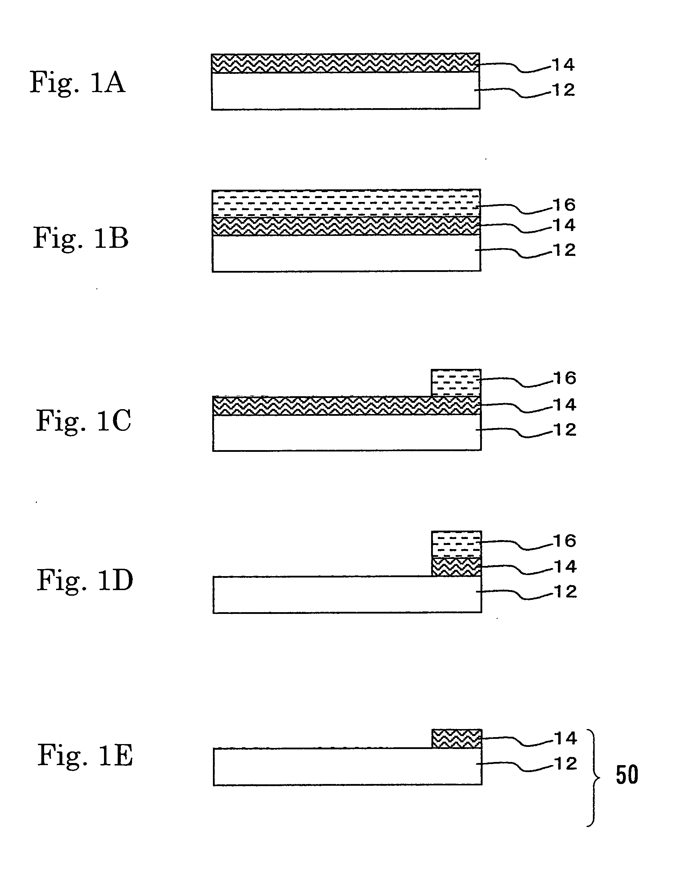

Hereinafter, details of the respective steps in the method of manufacturing an electrical switch of the present invention will be described with reference to Figs. 1A to 1E.

Figs. 1A to 1E are each a schematic sectional diagram of the base body surface during a manufacturing process for explaining an example ((C-A-2) to be described later) of the method of manufacturing an electrical switch as an embodiment of the present invention following an order of manufacture A to E. In the figures, reference numeral 12 denotes a board-like base body; 14, a carbon nanotube structure layer; and 16, a resist layer. The board-like base body 12 may have a multilayer structure including a layer as a base body laminated on another substrate.

### (A) Supplying Step

In the present invention, the "supplying step" is a step of supplying the base body surface with a solution (cross-linking solution) containing carbon nanotubes having functional groups and, as required, a cross-linking agent prompting a cross-linking reaction with the functional groups or an additive for chemically bonding the functional groups together. Only all of the desired regions must be supplied with the cross-linking solution in the supplying step, and there is no need to supply the entire surface of the base body with the cross-linking solution.

The supplying method is not particularly limited, and any method can be adopted from a wide range to supply the cross-linking solution. For example, the solution may be simply dropped or spread with a squeegee or may be applied through a common application method. Examples of common application methods include spin coating, wire bar coating, cast coating, roll coating, brush coating, dip coating, spray coating, and curtain coating.

The base body, the carbon nanotubes having functional groups, the cross-linking agent, and the contents of the cross-linking solution are as described in the section [Electrical Switch].

### (B) Cross-linking Step

In the present invention, the "cross-linking step" is a step of forming the carbon nanotube structure having a network structure constructed by mutually cross-linking the functional groups of the multiple carbon nanotubes by curing the cross-linking solution supplied. The cross-linking solution must be cured in the cross-linking step for forming a carbon nanotube structure layer in only all of the desired regions, and there is no need to cure all of the cross-linking solution supplied to the surface of the base body. Fig. 1A is a schematic sectional diagram showing a state of the base body surface after the cross-linking step (B).

An operation carried out in the cross-linking step is naturally determined according to the combination of the functional groups with the cross-linking agent or the additives for chemically bonding the functional groups together. A combination of thermosetting functional groups and cross-linking agent employs heating the cross-linking solution with various heaters or the like. A combination of functional groups and a cross-linking agent that are cured by UV rays employs irradiating the cross-linking solution with a UV lamp or leaving the cross-linking solution under the sun. A combination of air setting functional groups and cross-linking agent only employs letting the cross-linking solution stand still. "Letting the cross-linking solution stand still" is deemed as one of the operations that may be carried out in the cross-linking step of the present invention.

Heat curing (polyesterification through an ester exchange reaction) is conducted for the case of a combination of a carbon nanotube, to which the functional group -COOR (where R represents a substituted or unsubstituted hydrocarbon group and a preferable R is such as that described above) is added, and a polyol (among them, glycerin and/or ethylene glycol). Heating causes an ester exchange reaction between -COOR of the esterified carbon nanotube carboxylic acid and R'-OH (where R' represents a substituted or unsubstituted hydrocarbon group) of the polyol. As the reaction progresses multilaterally, the carbon nanotubes are cross-linked until a network of carbon nanotubes connected to each other constructs a carbon nanotube structure 1.

To give an example of conditions preferable for the above combination, the heating temperature is specifically set to preferably 50 to 500°C, more preferably 150 to 200°C. The heating time period for the above combination is specifically set to preferably 1 minute to 10 hours, more preferably 1 to 2 hours.

### (C) Patterning Step

In the present invention, the "patterning step" refers to a step of patterning the carbon nanotube structure layer into a pattern corresponding to an electrical contact. Fig. 1E is a schematic sectional diagram showing a state of the base body surface after the patterning step (C). Operations for the patterning step are not particularly limited, but there are two preferred modes (C-A) and (C-B) to the patterning step.

### (C-A)

In the mode (C-A) , dry etching is performed on regions of the carbon nanotube structure layer on the base body surface other than the region with a pattern corresponding to the electrical contact, thereby removing the carbon nanotube structure layer from those regions and patterning the carbon nanotube structure layer into a pattern corresponding to the electrical contact.

Patterning the carbon nanotube structure layer into a pattern corresponding to the electrical contact through dry etching means irradiating regions of the carbon nanotube structure layer on the base body surface other than the region with the pattern with radicals of the like. Methods of irradiating the regions with radicals or the like include: a method involving directly irradiating the regions of the carbon nanotube structure layer other than the region with the pattern with radicals or the like (C-A-1) ; and a method involving covering the regions other than the region with the pattern with a resist layer and then irradiating the entire base body surface (on the side where the carbon nanotube structure layer and the resist layer are formed) with radicals or the like (C-A-2).

### (C-A-1)

A method involving directly irradiating the regions of the carbon nanotube structure layer other than the region with the pattern with radicals or the like specifically involves selectively irradiating the regions of the carbon nanotube structure layer on the base body surface other than the region with the pattern corresponding to the electrical contact with ion beams of gas molecule ions, thereby removing the carbon nanotube structure layer of the irradiated regions and patterning the carbon nanotube structure layer into the pattern corresponding to the electrical contact.

Ions of gas molecules can be selectively applied with precision on the order of several nm as ion beams. This method preferably facilitates patterning to a pattern corresponding to an electrical contact in one operation.

Examples of gas species that can be selected for the ion beam method include oxygen, argon, nitrogen, carbon dioxide, and sulfur hexafluoride. Oxygen is particularly preferable in the present invention. The ion beam method involves: applying a voltage to gas molecules in vacuum to accelerate and ionize the gas molecules; and applying the obtained ions in a form of a beam. The ion beam method can be used for etching various substances with varying irradiation accuracy by changing the type of gas used.

### (C-A-2)

The patterning step involving covering the regions other that the region with the pattern with a resist layer and then irradiating the entire base body surface with radicals or the like includes: a step (C-A-2-1) of forming a resist layer on the region of the carbon nanotube structure layer on the base body surface patterned into a pattern corresponding to the electrical contact; and a step (C-A-2-2) of removing the carbon nanotube structure layer from exposed regions that are not covered with the resist layer by performing dry etching on the side of the base body where the carbon nanotube structure layer and the resist layer are laminated. The patterning step may further include a step (C-A-2-3) of peeling off the resist layer formed in the resist layer forming step following the removal step.

### (C-A-2-1) Resist Layer Forming Step

In the resist layer forming step, a resist layer is formed on the region of the carbon nanotube structure layer on the base body surface patterned into a pattern corresponding to the electrical contact. This step follows a process generally called a photolithography process and, instead of directly forming a resist layer on the region of the carbon nanotube structure layer patterned into a pattern corresponding to the electrical contact, a resist layer 16 is once formed on the entire surface of a base body 12 on the side where a carbon nanotube structure layer 14 is formed as shown in Fig. 1B. Then the region with the pattern corresponding to the electrical contact is exposed to light and portions not exposed to light are removed through subsequent development. Finally, the resist layer 16 is provided on the region of the carbon nanotube structure layer 14 patterned into a pattern corresponding to the electrical contact.

Fig. 1C is a schematic sectional diagram showing the state of the base body surface of the resist layer 16 with the portion not exposed to light removed after the resist layer forming step (C-A-2-1). Depending on the type of resist, a portion exposed to light may be removed through development whereas a portion not exposed to light may remain.

A known method can be employed to form the resist layer. Specifically, the resist layer is formed by applying a resist agent to a substrate with a spin coater or the like and then heating the applied agent.

The material (resist agent) used to form the resist layer 16 is not particularly limited, and various conventional resist materials can be employed without any modification. A resin (forming a resin layer) is preferably used to form the resist layer. The carbon nanotube structure layer 14 has a mesh-like network of carbon nanotubes and is a porous structure. Formation of the resist layer 16 from a metal evaporation film or like other material that forms a film on the very surface and does not infiltrate deep into the pores cannot provide carbon nanotubes sufficiently sealed against radiation of plasma or the like (insufficient sealing means exposure to plasma or the like). Thus, plasma or the like passes through the pores and corrodes the carbon nanotube structure layer 14 under the resist layer 16, possibly reducing the contour of the remained carbon nanotube structure layer 14 through exposure of plasma or the like. A contour (area) of the resist layer 16 may be sufficiently enlarged compared to the pattern corresponding to the electrical contact taking into account this reduction in size. However, this method requires a wide gap between patterns and thus prevents formation of patterns close together.

Meanwhile, use of a resin as a material for the resist layer 16 allows infiltration of the resin into the pores and reduction of the carbon nanotubes exposed to plasma or the like. As a result, high density patterning of the carbon nanotube structure layer 14 is possible.

Examples of the resin material that mainly constitutes the resin layer include a novolac resin, polymethyl methacrylate, and a mixture of the two, but are not limited thereto.

The resist material for forming the resist layer is a mixture of one of the above resin materials or a precursor thereof, and a photosensitive material or the like. The present invention can employ any known resist material. For instance, OFPR 800 (available from TOKYO OHKA KOGYO CO., LTD. ) and NPR 9710 (available from NAGASE & CO., LTD.) can be employed.

Appropriate operations or conditions for light exposure of resist layer 16 (heating if the resist material used is thermosetting, a different exposure method is accordingly selected for a different type of resist material) and for development are selected in accordance with the resist material used. Examples of exposure and development operations or conditions include a light source wavelength, an intensity of light exposure, an exposure time, an exposure amount, environmental conditions during exposure, a development method, a type and concentration of a developer, a development time, a development temperature, and details of pre-treatment or post-treatment employed. When a commercially available resist material is used, exposure and development may be performed following an instruction manual for the resist material . In general, a UV-curable resist material is selected for easy handling and a photolithography process involves: exposing the resist layer to UV rays to a pattern corresponding to the electrical contact; developing the layer using an alkaline developer; washing off the developer with water; and then drying the layer.

### (C-A-2-2) Removal Step

In the removal step, dry etching is performed on the side of the base body where the carbon nanotube structure layer and the resist layer are laminated, thereby removing the carbon nanotube structure layer exposed in the regions not covered with the resist layer. (For the exposed regions, see Fig. 1C. The carbon nanotube structure layer 14 is exposed in regions where the resist layer 16 is removed.) Fig. 1D is a schematic sectional diagram showing the state of the base body surface after the removal step (C-A-2-2) .

Operations for the removal step employ most of methods that are generally called dry etching, including a reactive ion method. Dry etching includes the above-described ion beam method in (C-A-1) .

Gas species, devices, operation environments, and the like that can be selected are the same as those described in the section (C-A-1).

In the present invention, oxygen is particularly desirable out of examples of gas species generally selected for dry etching including oxygen, argon, and fluorine-based gas (e.g., chlorofluorocarbon, SF₆, and CF₄). Oxygen radicals can oxidize (burn) carbon nanotubes in the regions of the carbon nanotube structure layer 14 that are to be removed and convert the carbon nanotubes into carbon dioxide. Accordingly, residues have little adverse effect, and accurate patterning can be achieved.

Oxygen selected as gas species may generate oxygen radicals by irradiating oxygen molecules with UV rays . A device that generates oxygen radicals through this method is commercially available by the tradename of UV Asher, and is easily obtained.

### (C-A-2-3) Resist Layer Peeling Step

The method of manufacturing the electrical member of the present invention may end with the completion of the removal step (C-A-2-2), providing a mode of the electrical member of the present invention (the mode shown in Fig. 1D) . Removal of the resist layer 16 requires operations for the step of peeling the resist layer 16 formed in the resist layer forming step, after the removal step. Fig. 1E is a schematic sectional diagram showing the state of the base body surface after the resist layer peeling step (C-A-2-3).

Operations for the resist layer peeling step are accordingly selected in accordance with the material used to form the resist layer 16. When a commercially available resist material is used, the resist layer 16 is peeled off following an instruction manual for the resist material. A resin layer as the resist layer 16 is removed by bringing the resin layer into contact with an organic solvent capable of dissolving the resin layer.

### (C-B)

The mode (C-B) of the patterning step includes: the step of forming a resist layer on the region of the carbon nanotube structure layer on the base body surface patterned into a pattern corresponding to the electrical contact; and the step of removing the carbon nanotube structure layer exposed in the regions not covered with the resist layer by bringing an etchant into contact with the side of the base body where the carbon nanotube structure layer and the resist layer are laminated.

This mode is a method commonly called wet etching (a method of removing an arbitrary portion using chemical = etchant).

The details of the resist layer forming step in the mode (C-B) is the same as those described in the resist layer forming step (C-A-2-1) described above except that a resist material resistant to an etchant is desirably used in the mode (C-B). Similar to the mode (C-A) of the patterning step, the removal step in the mode (C-B) of the patterning step may be followed by the resist layer peeling step and details of this peeling step are the same as those described in the resist layer peeling step (C-A-2-3). Detailed descriptions of these steps are therefore omitted here.

With reference to Fig. 1C, in the removal step in the mode (C-B) , an etchant is brought into contact with the side of the base body 12 where the carbon nanotube structure layer 14 and the resist layer 16 are laminated, thereby removing the carbon nanotube structure layer 14 exposed in the regions not covered with the resist layer 16.

In the present invention, "bringing a liquid into contact with" is a concept including all operations for bringing a liquid into contact with a subject, and a liquid may be brought into contact with a subject through any method such as dipping, spraying, and letting a liquid flow over a subject.

An etchant is in general an acid or alkali. Which type of etchant to select is determined by the resist material constituting the resist layer 16, the cross-linking structure among the carbon nanotubes in the carbon nanotube structure layer 14, and other factors. A desirable etchant is one that etches the resist layer 16 as little as possible and that can easily remove the carbon nanotube structure layer 14. However, an etchant that etches the resist layer 16 may be employed if it is possible to remove the exposed regions of the carbon nanotube structure layer 14 before the resist layer 16 is completely etched away, by appropriately controlling the temperature and concentration of the etchant and how long the etchant is in contact with the carbon nanotube structure layer.

### (D) Packaging Step

A first electrode composed of the electrical member obtained through the respective steps and a second electrode are packaged so that the second electrode can contact with or separate from an electrical contact of the first electrode, to thereby manufacture the electrical device of the present invention.

### (E) Other Steps

An electrical member of the present invention can be manufactured through the above steps (A) to (C) . However, the method of manufacturing an electrical member of the present invention may include other steps.

For instance, a surface treatment step of treating the base body surface in advance is preferably provided before the supplying step. Purposes of the surface treatment step include: enhancing the absorption of the cross-linking solution supplied; enhancing the adhesion between the carbon nanotube structure layer formed as an upper layer and the base body surface; cleaning the base body surface; and adjusting the electrical conductivity of the base body surface.

An example of the surface treatment for enhancing the absorption of the cross-linking solution is treatment by a silane coupling agent (e.g., aminopropyltriethoxysilane or γ-(2-aminoethyl)aminopropyltrimethoxysilane). Surface treatment by aminopropyltriethoxysilane is particularly widely employed and is preferable for the surface treatment step in the present invention. As documented in Y. L. Lyubchenko et al., Nucleic Acids Research vol. 21, p. 1117-1123, 1993, for example, surface treatment by aminopropyltriethoxysilane has been conventionally employed for surface treatment of a mica substrate used in AFM observation of DNA.

### <Application Example of Method of Manufacturing Electrical Device of the Present Invention>

A useful application example of a method of manufacturing an electrical device of the present invention involves: patterning a carbon nanotube structure layer on the surface of a temporary substrate first; and then transferring to a desired base body. This transfer step may be modified into: transferring the patterned carbon nanotube structure layer from the temporary substrate to the surface of an intermediate transfer body first; and then transferring to a desired base body.

The temporary substrate material that can be used in the application example of the present invention is the same as the base body material described in the section [Electrical Switch]. However, a temporary substrate desirably has at least one flat surface, and is more preferably shaped like a flat plate for transferability of the carbon nanotube structure layer in the transfer step.

A temporary substrate or an intermediate transfer body that can be employed in the application example must have an adhesive surface holding an adhesive or a surface capable of holding an adhesive. A general tape such as a cellophane tape, a paper tape, a cloth tape, or an imide tape can be used in the application example. In addition to the tape and other materials that have plasticity or flexibility, rigid materials may also be employed as a temporary substrate or an intermediate transfer body. A material without an adhesive can be used as a normal adhesive tape by applying an adhesive to the surface of a material that can hold an adhesive to form an adhesive surface.

According to the application example of the present invention, the electrical device of the present invention can be manufactured with ease.

An electrical switch can also be manufactured by: preparing a carbon nanotube structure layer, as an electrical contact, formed on the surface of a conductive base body; and attaching the base body surface and the conductive base body.

Alternatively, an electrical contact can be manufactured with a cross-linking step omitted by: using a carbon nanotube transfer body, which is a temporary substrate (or intermediate transfer body) carrying on its surface a carbon nanotube structure layer; transferring the carbon nanotube structure layer alone on a base body; and then removing temporary substrate (or intermediate transfer body). The intermediate transfer body may serve as a temporary substrate of the carbon nanotube transfer body in the process. Such an intermediate transfer body is included in the present invention because there is no need to discriminate an intermediate transfer body from a temporary substrate as a carbon nanotube transfer body.

The carbon nanotube transfer body has a carbon nanotube structure layer carried on the surface of the temporary substrate with carbon nanotubes cross-linked to each other, and use of the carbon nanotube transfer body greatly facilitates handling of the carbon nanotube structure layer in the subsequent steps. As a result, an electrical device of the present invention can be manufactured with much ease. A method of removing the temporary substrate can be appropriately selected from the group consisting of simple peeling, chemical decomposition, burn-off, melting, sublimation, and dissolution.

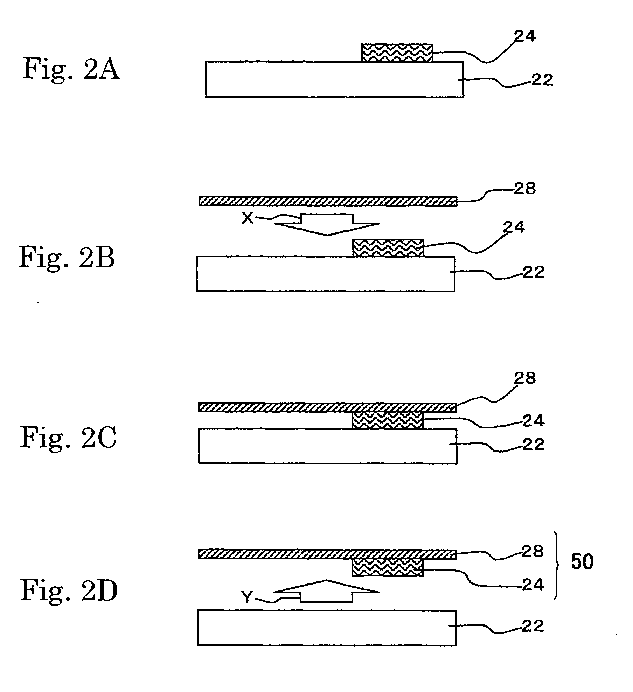

Hereinafter, the transfer step will be described with reference to Figs. 2A to 2D.

Figs. 2A to 2D are schematic sectional diagrams of a temporary substrate and a base body during a manufacturing process for explaining an example of a method of manufacturing a carbon nanotube transfer body in the application example of the present invention, following an order of manufacture 2A to 2D. In Figs. 2A to 2D, reference numeral 22 denotes a temporary substrate; 24, a carbon nanotube structure layer; and 28, a base body. The carbon nanotube structure layer 24 has the same structure as that of the carbon nanotube structure layer 14 in Figs. 1A to 1E.

First, operations for the supplying step, the cross-linking, and the patterning step in the above-described method of manufacturing an electrical member are repeated except that the temporary substrate 22 is used instead of the base body 12, to thereby produce the carbon nanotube structure layer 24 formed on the surface of the temporary substrate 22 as shown in Fig. 2A.

Next, the base body 28 such as an adhesive tape is prepared as shown in Fig. 2B. The base body 28 is moved in a direction of an arrow X with the adhesive surface facing the side of the temporary substrate 22 on which the carbon nanotube structure layer 24 is formed, to thereby attach the base body 28 and the temporary substrate 22 as shown in Fig. 2C.

Then, as shown in Fig. 2D, the base body 28 is moved to a direction of an arrow Y, to thereby peel off the base body 28 from the temporary substrate 22 having the carbon nanotube structure layer 24 formed. Thus, the carbon nanotube structure layer 24 formed on the surface of the temporary substrate 22 is transferred to the adhesive surface of the base body 28.

As described above, the carbon nanotube structure layer 24 is patterned on the base body 28 through the temporary substrate 22, to thereby manufacture an electrical member provided with a carbon nanotube transfer body of the present invention.

The method of manufacturing an electrical member including the transfer step is effective particularly when an electrode of a device has a material and/or shape to which the method of manufacturing an electrical member according to the present invention is hardly applied as it is.

For instance, the method of manufacturing an electrical member of the present invention including the transfer step is effective when the temperature at which the supplied solution is cured in the cross-linking step is equal to or higher than the melting point or glass transition temperature of the material to be used as an electrode of an electrical switch. In this case, the heating temperature is set lower than the melting point of the temporary substrate to ensure a heating temperature necessary for the curing, and thus, the electrical member of the present invention can be manufactured appropriately.

To give another example, the method of manufacturing an electrical member of the present invention including the transfer step is effective also when the patterning step includes: performing dry etching on regions of the carbon nanotube structure layer on the temporary substrate surface other than the region patterned into a pattern corresponding to the electrical contact to remove the carbon nanotube structure layer from those regions; and patterning the carbon nanotube structure layer into a pattern corresponding to the electrical contact while the material to be used as an electrode is not resistant to dry etching in the patterning step. In this case, use of a material resistant to dry etching as the temporary substrate can ensure resistance of the temporary substrate to the operations for the patterning step, and thus the electrical member of the present invention can be manufactured appropriately.

To give another example, the method of manufacturing an electrical member of the present invention including the transfer step is effective also when the patterning step includes the steps of: forming a resist layer on the region of the carbon nanotube structure layer on the temporary substrate surface patterned into a pattern corresponding to the electrical contact; and removing the carbon nanotube structure layer exposed in the regions not covered with the resist layer by bringing an etchant into contact with the side of the temporary substrate where the carbon nanotube structure layer and the resist layer are laminated while the base body of the electrode has no resistance to the etchant used in the patterning step whereas the temporary substrate is resistant to the etchant.

Specifics on resistance and material vary depending on etching conditions including the type, concentration, and temperature of the etchant used, and how long the etchant is in contact with the carbon nanotube structure layer. When an acidic etchant is used and a material not resisting acid such as aluminum is used as a base body of the electrode, for example, limitations brought by low resistance of the base body material are thrown off by employing the application example of the present invention and using silicon or other materials that are resistant to acid as the temporary substrate. Limitations brought by low resistance are also thrown off by using as the base body of the electrode a material that has low resistance to an etchant as described above though depending on whether the etchant is acidic or alkaline.

As another mode, the electrical member and the electrical device of the present invention can be manufactured by attaching a base body on which a carbon nanotube structure layer 24 is formed to a second conductive base body, for easier handling. The second base body may be physically rigid or may be plastic or flexible, and can have various shapes including a spherical shape and a concave-convex shape.

Hereinafter, the present invention will be described more specifically by way of examples. However, the present invention is not limited to the following examples.

### <Example 1>

An electrode was manufactured in accordance with the flow of the method of manufacturing an electrical member shown in Figs. 1A to 1E, and then an electrical switch provided with the electrode was manufactured. The description of Example 1 may use the reference numerals shown in Figs. 1A to 1E.

### (A) Supplying Step

### (A-1) Preparation of Cross-linking Solution (Addition Step)

### (1) Addition of Carboxyl Group ... Synthesis of Carbon Nanotube Carboxylic Acid

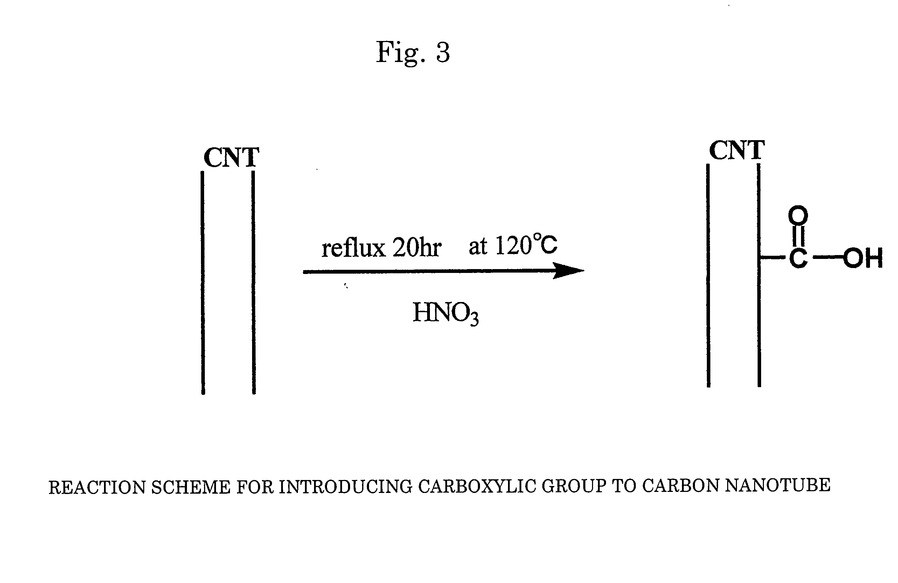

30 mg of multi-wall carbon nanotube powder (purity: 90%, average diameter: 30 nm, average length: 3 µm, available from Science Laboratories, Inc.) was added to 20 ml of concentrated nitric acid (60 mass% aqueous solution, available from Kanto Kagaku) for reflux at 120°C for 20 hours, to synthesize carbon nanotube carboxylic acid. A reaction scheme of the above is shown in Fig. 3. In Fig. 3, a carbon nanotube (CNT) portion is represented by two parallel lines (the same applies for other figures relating to reaction schemes).

The temperature of the solution was returned to room temperature, and the solution was centrifuged at 5,000 rpm for 15 minutes to separate a supernatant liquid from a precipitate. The recovered precipitate was dispersed in 10 ml of pure water, and the dispersion liquid was centrifuged again at 5,000 rpm for 15 minutes to separate a supernatant liquid from a precipitate (the above process constitutes one washing operation). This washing operation was repeated five more times, and finally, a precipitate was recovered.

An infrared absorption spectrum of the recovered precipitate wasmeasured. Aninfraredabsorptionspectrumoftheusedmulti-wall carbon nanotube raw material itself was also measured for comparison. A comparison between both the spectra revealed that absorption at 1,735 cm⁻¹ characteristic of a carboxylic acid, which was not observed in the multi-wall carbon nanotube raw material itself, was observed in the precipitate. This finding shows that a carboxyl group was introduced into a carbon nanotube by the reaction with nitric acid. In other words, this finding confirmed that the precipitate was carbon nanotube carboxylic acid.

Addition of the recovered precipitate to neutral pure water confirmed that dispersability was good. This result supports the result of the infrared absorption spectrum that a hydrophilic carboxyl group was introduced into a carbon nanotube.

### (2) Esterification

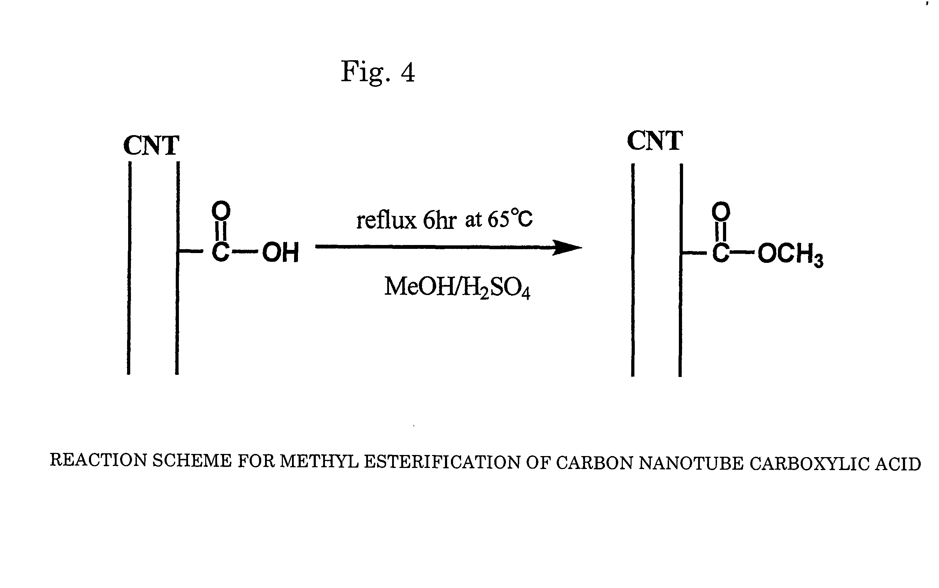

30 mg of the carbon nanotube carboxylic acid prepared in the above step was added to 25 ml of methanol (available from Wako Pure Chemical Industries, Ltd.). Then, 5 ml of concentrated sulfuric acid (98 mass%, available from Wako Pure Chemical Industries, Ltd.) was added to the mixture, and the whole was refluxed at 65°C for 6 hours for methyl esterification. The reaction scheme for the above-described methyl esterification is shown in Fig. 4.

After the temperature of the liquid solution had been returned to room temperature, the solution was filtered to separate a precipitate. The precipitate was washed with water, and was then recovered. An infrared absorption spectrum of the recovered precipitate was measured. As a result, absorption at 1,735 cm⁻¹ and in the range of 1,000 to 1,300 cm⁻¹ characteristic of ester were observed. This result confirmed that the carbon nanotube carboxylic acid was esterified.

### (Mixing Step)

30 mg of the carbon nanotube carboxylic acid methyl esterified in the above step was added to 4 g of glycerin (available from Kanto Kagaku) as a cross-linking agent, and the whole was mixed using an ultrasonic disperser. Further, the mixture was added to 4 g of methanol as a viscosity modifier, to thereby prepare a cross-linking solution (1).

### (A-2) Surface Treatment Step of Base Body

A silicon wafer (76.2 mmΦ (diameter: 3 inches), thickness: 380 µm, thickness of surface oxide film: 1 µm, available from advantech Co. , Ltd. ) was prepared as the base body 12. The silicon wafer was subjected to surface treatment for allowing the use of the wafer as a base body, which included: arsenic ion implantation of about 1 × 10¹⁵ cm⁻²; and heating treatment at 800°C. The silicon wafer was then subjected to surface treatment using the cross-linking solution (1) to be applied to the wafer and aminopropyltriethoxysilane for enhancing adsorption with the silicon wafer.

The surface treatment using aminopropyltriethoxysilane involved exposing the silicon wafer to 50 µl of aminopropyltriethoxysilane (available from Sigma-Aldrich Co.) vapor for about 3 hours in a closed Schale.

A silicon wafer not subjected to surface treatment was prepared separately for comparison.

### (A-3) Supplying Step

The cross-linking solution (1 µl) prepared in Step (A-1) was applied to the surface of the base body subjected to the surface treatment by using a spin coater (1H-DX2, manufactured by MIKASA Co., Ltd.) at 100 rpm for 30 seconds. The solution was similarly applied to the base body not subjected to the surface treatment for comparison.

### (B) Cross-linking Step

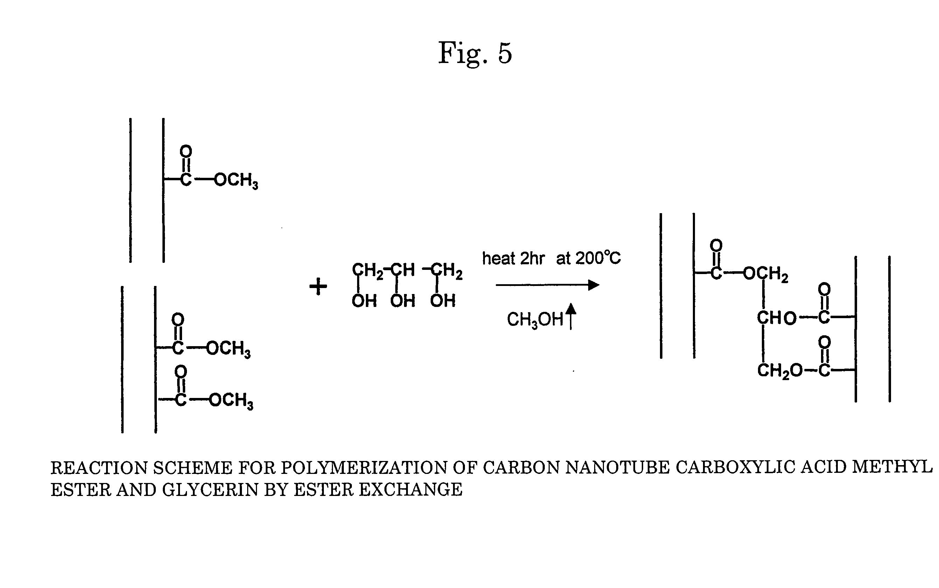

After the application of the cross-linking solution, the base body 12 on which the cross-linked substance coat had been formed was heated at 200°C for 2 hours to cure the coat, thereby forming the carbon nanotube structure 14 (Fig. 1A). The base body not subjected to the surface treatment for comparison was similarly heated to cure the coat. The reaction scheme is shown in Fig. 5.

The observation of the state of the obtained carbon nanotube structure layer 14 by an optical microscope confirmed that the layer was an extremely uniform cured film. On the other hand, the observation of the state of the obtained carbon nanotube structure layer formed on the base body not subjected to the surface treatment for comparison by an optical microscope confirmed that the layer was a sufficiently uniform cured film though slightly inferior to the film subjected to surface treatment.

(C) Patterning Step

### (C-1) Resist Layer Forming Step

A resist agent (NPR9710, viscosity: 50 mPa·s, available from Nagase &Co., Ltd.) was applied to the surface of the carbon nanotube structure layer 14 formed on the silicon wafer 12 (subjected to the surface treatment) by using a spin coater (1H-DX2, manufactured by MIKASA Co., Ltd.) at 2,000 rpm for 20 seconds. The resultant was then heated on a hot plate at 100 °C for 2 minutes for film formation, thereby forming a resist layer 16 (Fig. 1B).

A composition of the resist agent NPR9710 is described below.

| | |
|---|---|
| Propylene glycol monomethyl ether acetate | 50 to 80 mass% |
| Novolac resin | 20 to 50 mass% |
| Sensitizer | less than 10 mass% |

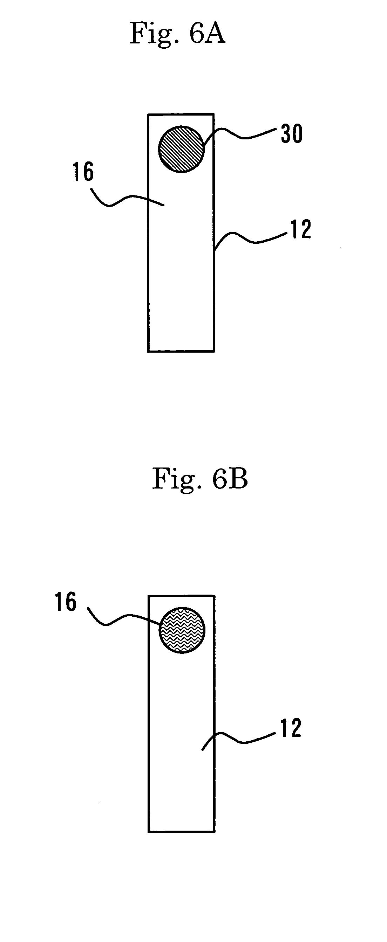

Next, the surface of the resist layer 16 of the silicon wafer 12 having the carbon nanotube structure layer 14 and the resist layer 16 formed was exposed to light using Mask Aligner (MA-20, mercury vapor lamp, wavelength: 436 nm, manufactured by MIKASA Co. , Ltd.) under the conditions of an light amount of 12.7 mW/cm² and 4 seconds in a shape of an exposure portion 30 shown in Fig. 6A. Fig. 6A is an enlarged plan view of the silicon wafer 12 having the carbon nanotube structure layer 14 and the resist layer 16 formed seen from the side of the resist layer 16, for explaining the shape the resist layer 16 to remain. Reference numeral 30 denotes the exposure portion on the surface of the resist layer 16. The exposure portion 30 has a shape of an electrical contact in Example 1.

Further, the exposed base body 12 was heated on a hot plate at 110°C for 1 minute and left to cool. Development was carried out using a developer (NMD-3, tetramethylammonium hydroxide, 2.38 mass%, available from TOKYO OHKA KOGYO CO. , LTD.) with a developing device (AD-1200, manufactured by Takizawa Sangyo Kabushikikaisha) (Fig. 1C) . The observation by an optical microscope confirmed that the resist layer 16 was shaped into an electrical contact.

### (C-2) Removal Step

The base body 12 having the resist layer 16 formed in a shape of a predetermined pattern as described above was heated in a mixed gas (oxygen: 10 ml/min, nitrogen: 40 ml/min) at 200°C and was irradiated with UV rays (172 nm) for 5 hours with a UV Asher (excimer vacuum ultraviolet ray lamp, EXM-2100BM, wavelength: 172 nm, manufactured by ATOM-GIKEN Co., Ltd.). Oxygen radicals were generated, to thereby remove a portion of the carbon nanotube structure layer 14 not protected by the resist layer 16. As a result, as shown in Fig. 6B, the carbon nanotube structure layer 14 covered with the resist layer 16 was shaped into an electrical contact (Fig. 1D).

Fig. 6B is an enlarged plan view of the base body 12 after the removal step seen from the side of the resist layer 16. The resist layer 16 remains on the surface of the electrode 12 through the not-shown carbon nanotube structure layer 14.

### (C-3) Resist Layer Removal Step

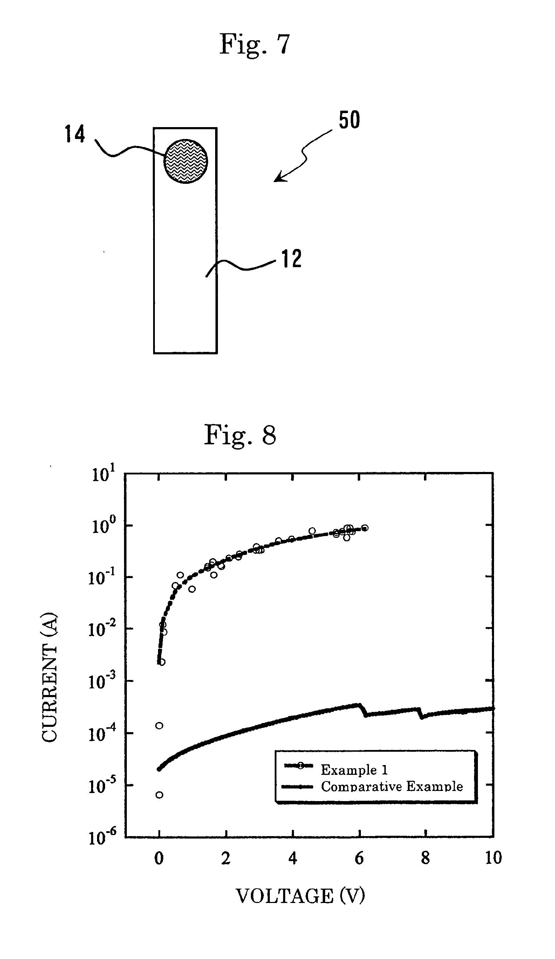

The resist layer 16 remained as an upper layer of the carbon nanotube structure layer 14 shaped into the "predetermined pattern" was removed through washing with acetone (Fig. 1E) . The observation of the surface of the obtained carbon nanotube device by an optical microscope confirmed that the carbon nanotube structure layer 14 was shaped into the "predetermined pattern" as shown in Fig. 7.

The above method provided an electrode 50 (electrical member) having the carbon nanotube structure layer 14 formed, which serves as an electrical contact for the electrical switch used in Example 1.

In addition, phosphor bronze (thickness : 500 µm) was similarly prepared as a movable base body 12'. The cross-linking solution (1) was prepared, and the supplying step, the cross-linking step, and the patterning step were carried out as in Example, to thereby form the carbon nanotube structure layer 14 into a predetermined pattern.

Next, the electrode 50 having the carbon nanotube structure layer 14 formed and serving as an electrical contact was packaged into the electrical switch shown in Fig. 9. An electrode terminal formed by connecting with a silver paste a not-shown lead wire connecting a not-shown electrical device to an end portion opposite to the end where the electrical contact between the base bodies 12 and 12' was formed, to thereby produce an electrical switch.

Next, DC current-voltage characteristics measurement was carried out according to a two-terminal method by using a Picoammeter 4140B (manufactured by Hewlett-Packard) to determine the DC conductivity of the obtained carbon nanotube structure layer 14 at the electrical contact of Example 1. The conductivity was determined to be 17 S·cm⁻¹. The result confirmed that the carbon nanotube structure was networked.

### [Comparative Example 1]

10 mg of multi-wall carbon nanotube powder (purity: 90%, average diameter: 30 nm, average length: 3 µm, available from Science Laboratories, Inc.) was dispersed in 20 g of isopropyl alcohol. The dispersion liquid had very poor dispersibility and had no properties of an application (cross-linking solution).

About 0.1 ml of the obtained dispersion liquid was dropped and spread onto the same substrate as that in Example 1 with a Pasteur's pipette. The resultant was heated at about 100°C for 10 minutes, to thereby obtain a deposit (electrode of Comparative Example 1) of a multi-wall carbon nanotube not cross-linked. The observation of the obtained deposit by an optical microscope at 10 to 20 times magnification confirmed that the deposit was separated into island shapes as aggregates and that the deposit was not in a form of a film. The above results show that the dispersion liquid or deposit of Comparative Example 1 having no cross-linking structure is poor in film formation, and does not serve as a carbon nanotube structure layer.

### (Verification Test)

Electrical properties were compared for the electrode (first electrode) of Example 1 and the deposit (electrode of Comparative Example 1) obtained in Comparative Example 1. Samples prepared as a carbon nanotube structure layer or deposited layer having a thickness of about 1 µm on a SiO₂/Si substrate through the same method as those described in Example 1 and Comparative Example 1 were used for the verification test.

Two gold electrodes were deposited on each of the films with a gap interval of 350 µm. DC conductivity was measured for each film according to a two-terminal method by using a Picoammeter 4140B (manufactured by Hewlett-Packard) . Fig. 8 shows the result of the DC current-voltage characteristics measurement. The electrode of Example 1 allows passage of a current of about 0.8 A at 5V but the electrode of Comparative Example 1 allows passage of a current of about 3 × 10⁻⁴ A, showing that the electrode of Example 1 allows passage of a current of 3 orders or more.

Further, in the electrode of Comparative Example 1, after passage of a current of about 6.4 × 10⁻⁴ A (at 6.0 V), the current drops suddenly. This presumably results because a portion of the carbon nanotubes mutually overlapped generates heat through resistance from the fact that the deposit is not chemically bonded unlike the carbon nanotube structure layer of Example 1. Thus, electrical connection due to overlapping of the carbon nanotube is partially lost.

### <Example 2>

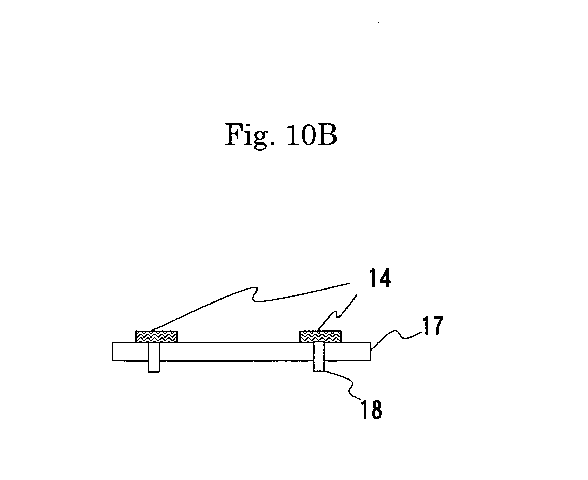

Figs. 10A and 10B show variants of the electrical switch employing as an electrical contact for a rotary switch a carbon nanotube structure having a network structure constructed by mutually cross-linking functional groups of the multiple carbon nanotubes through chemical bonding of the functional groups. Fig. 10A is a plan view showing a rotary switch constructed by fixing multiple electrical contacts 14 on an insulating support plate 17 of ceramics or the like, and Fig. 10B is a cross section of the same along B-B. A conductive terminal 18 is buried in the support plate 17, and the support plate 17 is electrically connected to the electrical contacts 14 formed by applying an electrical contact material.

A reference electrode (not-shown), which rotates around the center of the support plate 17 as an axis and which is brought in contact with the electrical contact, is provided to face the electrical contact. A rotating switch selectively connecting the respective contacts depending on the rotational direction is provided, to thereby construct a rotary switch.

A carbon nanotube structure having a network structure is employed as an electrical contact 14, and thus, stable electrical connection through contact can be provided over a long period of time.

The present invention can provide: an electrical member and electrical device allowing stable electrical connection through contact over a long period of time; and a method of manufacturing the electrical member and electrical device.

## Claims

1. An electrical member, comprising a base body and an electrical contact formed on the base body, wherein
the electrical contact comprises a carbon nanotube structure having a network structure constructed by mutually cross-linking functional groups bonded to multiple carbon nanotubes through chemical bonding of the functional groups together.

2. An electrical device, comprising a first electrode composed of the electrical member according to claim 1 and a second electrode which can contact with and separate from the electrical contact.

3. An electrical member according to claim 1, wherein the carbon nanotube structure is obtained by curing a solution containing multiple carbon nanotubes to which multiple functional groups are bonded, to thereby form a cross-linked site through chemical bonding of the multiple functional groups bonded to the carbon nanotubes.

4. An electrical member according to claim 3, wherein:
the cross-linked site has a structure constructed by cross-linking the multiple functional groups together through a cross-linking agent in the solution; and
the cross-linking agent is not self-polymerizable.

5. An electrical member according to claim 3, wherein the cross-linked site has a chemical structure selected from the group consisting of -COO (CH₂) ₂OCO- , -COOCH₂CHOHCH₂OCO-, -COOCH₂CH(OCO-)CH₂OH, and -COOCH₂CH (OCO-) CH₂OCO- .

6. An electrical member according to claim 3, wherein the cross-linked site is formed through chemical bonding of the multiple functional groups together.

7. An electrical member according to claim 6, wherein a reaction that forms the chemical bonding comprises one reaction selected from the group consisting of a condensation reaction, a substitution reaction, an addition reaction, and an oxidative reaction.

8. An electrical member according to claim 3, wherein the cross-linked site comprises one selected from the group consisting of -COOCO-, -O- -NHCO-, -COO-, -NCH-, -NH-, -S-, -O-, -NHCOO-, and -S-S-.

9. An electrical member according to claim 1, wherein the multiple carbon nanotubes comprise multi-wall carbon nanotubes.

10. A method of manufacturing an electrical member, comprising the steps of:
supplying a base body surface with a solution containing multiple carbon nanotubes to which multiple functional groups are bonded; and
mutually cross-linking the multiple carbon nanotubes through chemical bonding of the multiple functional groups together to construct a network structure constituting a carbon nanotube structure as an electrical contact.

11. A method of manufacturing an electrical member according to claim 10, wherein the solution contains a cross-linking agent that cross-links the multiple functional groups together.

12. A method of manufacturing an electrical member according to claim 11, wherein the cross-linking agent is not self-polymerizable.

13. A method of manufacturing an electrical member according to claim 11, wherein:
the functional groups comprise at least one functional group selected from the group consisting of -OH, -COOH, -COOR (where R represents a substituted or unsubstituted hydrocarbon group), -COX (where X represents a halogen atom), -NH₂, and -NCO; and
the cross-linking agent is capable of prompting a cross-linking reaction with the selected functional groups.

14. A method of manufacturing an electrical member according to claim 11, wherein:
the cross-linking agent comprises at least one cross-linking agent selected from the group consisting of a polyol, a polyamine, a polycarboxylic acid, a polycarboxylate, a polycarboxylic acid halide, a polycarbodiimide, and a polyisocyanate; and
each of the functional groups is capable of prompting a cross-linking reaction with the selected cross-linking agent.

15. A method of manufacturing an electrical member according to claim 11, wherein:
the functional groups comprise at least one functional group selected from the group consisting of -OH, -COOH, -COOR (where R represents a substituted or unsubstituted hydrocarbon group), -COX (where X represents a halogen atom), -NH₂, and -NCO;
the cross-linking agent comprises at least one cross-linking agent selected from the group consisting of a polyol, a polyamine, a polycarboxylic acid, a polycarboxylate, a polycarboxylic acid halide, a polycarbodiimide, and a polyisocyanate; and
the functional groups and the cross-linking agent are respectively selected so that a combination of the selected functional groups and cross-linking agent is capable of prompting a mutual cross-linking reaction.

16. A method of manufacturing an electrical member according to claim 13, wherein each of the functional groups comprises -COOR (where R represents a substituted or unsubstituted hydrocarbon group).

17. A method of manufacturing an electrical member according to claim 16, wherein the crosslinking agent comprises a polyol.

18. A method of manufacturing an electrical member according to claim 17, wherein the cross-linking agent comprises at least one selected from the group consisting of glycerin, ethylene glycol, butenediol, hexynediol, hydroquinone, and naphthalenediol.

19. A method of manufacturing an electrical member according to claim 10, wherein the solution further contains a solvent.

20. A method of manufacturing an electrical member according to claim 19, wherein the cross-linking agent also serves as a solvent.

21. A method of manufacturing an electrical member according to claim 10, wherein a reaction that forms the chemical bonding comprises a reaction for chemically bonding the multiple functional groups together.

22. A method of manufacturing an electrical member according to claim 21, wherein the solution further contains an additive that forms the chemical bonding of the multiple functional groups together.

23. A method of manufacturing an electrical member according to claim 22, wherein the reaction comprises dehydration condensation and the additive comprises a condensation agent.

24. A method of manufacturing an electrical member according to claim 23, wherein the functional groups comprise at least one functional group selected from the group consisting of -COOR (where R represents a substituted or unsubstituted hydrocarbon group), -COOH, -COX (where X represents a halogen atom), -OH, -CHO, and -NH₂.

25. A method of manufacturing an electrical member according to claim 24, wherein each of the functional groups comprises -COOH.

26. A method of manufacturing an electrical member according to claim 23, wherein the condensation agent comprises one selected from the group consisting of sulfuric acid, N-ethyl-N'-(3-dimethylaminopropyl)carbodiimide, and dicyclohexyl carbodiimide.

27. A method of manufacturing an electrical member according to claim 22, wherein the reaction comprises a substitution reaction and the additive comprises a base.

28. A method of manufacturing an electrical member according to claim 27, wherein the functional groups comprise one functional group selected from the group consisting of -NH₂, -X (where X represents a halogen atom), -SH, -OH, -OSO₂CH₃, and -OSO₂(C₆H₄)CH₃.

29. A method of manufacturing an electrical member according to claim 27, wherein the base comprises one selected from the group consisting of sodium hydroxide, potassium hydroxide, pyridine, and sodium ethoxide.

30. A method of manufacturing an electrical member according to claim 21, wherein the reaction comprises an addition reaction.

31. A method of manufacturing an electrical member according to claim 30, wherein the functional groups comprise at least one of -OH and -NCO.

32. A method of manufacturing an electrical member according to claim 21, wherein the reaction comprises an oxidative reaction.

33. A method of manufacturing an electrical member according to claim 32, wherein each of the functional groups comprises -SH.

34. A method of manufacturing an electrical member according to claim 32, wherein the solution further contains an oxidative reaction accelerator.

35. A method of manufacturing an electrical member according to claim 34, wherein the oxidative reaction accelerator comprises iodine.

36. A method of manufacturing an electrical device comprising the step of:
packaging a first electrode composed of the electrical member obtained through the method of manufacturing an electrical member according to claim 10 and a second electrode, in such a manner that the second electrode can contact with and separate from an electrical contact of the first electrode.
